# EUROPÄISCHE PATENTSCHRIFT

(11) **EP 2 703 917 B1**
(45) Veröffentlichungstag und Bekanntmachung des Hinweises auf die Patenterteilung: **24.08.2016**
(21) Anmeldenummer: 12006218.7
(22) Anmeldetag: 03.09.2012
(51) Int. Cl.: G05B 19/042, A62C 37/44, A62C 37/50

(54) **Elektronischer Schaltschrank für Elektrosprinklerpumpen und Verfahren zur Überwachung und Steuerung von Löschanlagenkomponenten**
Electronic control cabinet for electric sprinkler pumps and method for monitoring and controlling extinguishing system components
Armoire électrique pour électropompes de gicleur d'incendie et procédé de surveillance et de commande de composants pour installations d'extinction d'incendie

(43) Veröffentlichungstag der Anmeldung: 05.03.2014
(73) Patentinhaber: Minimax GmbH & Co. KG, 23840 Bad Oldesloe (DE)
(72) Erfinder: Capsius, Christian, 23843 Rümpel (DE); Hallwass-Fedder, Bernd, 22159 Hamburg (DE); Steffen, Hartwig, 21465 Reinbek (DE)

(56) Entgegenhaltungen:
- DE-A1- 19 512 372
- DE-A1-102005 008 517
- DE-A1-102006 010 748
- US-A1- 2004 170 138
- MIRCOM: 'PRO-2000 Series Addressable Fire Detection and Control System Installation and Operation Manual', [Online] 01 Mai 2011, CANADA, XP055181565 Gefunden im Internet: <URL:http://www.mircom.com/media/manuals/LT -1012_PRO-2000_Installation_Manual.pdf> [gefunden am 2015-04-08]

## Beschreibung

Die Erfindung betrifft einen elektronischen Schaltschrank für Elektrosprinklerpumpen für Löschanlagen mit einem Leistungsteil mit internen Komponenten, welche einen Hauptschalter, einen Motorstarter, welcher über eine Stromversorgungsleitung mit dem Sprinklerpumpenmotor verbunden ist, eine Motorüberwachungseinrichtung und eine Netzüberwachungseinheit umfassen, sowie mit einem Steuerteil.

Außerdem betrifft die Erfindung ein Verfahren zur Überwachung und Steuerung von Löschanlagenkomponenten mit einem elektronischen Schaltschrank für Elektrosprinklerpumpen.

Die Erfindung ist überall dort anwendbar, wo in Feuerlöschanlagen Elektrosprinklerpumpen im Brandfall angesteuert werden, Löschanlagenkomponenten überwacht und angesteuert und in regelmäßigen Abständen gewartet werden müssen und eine Kontrolle über Ereignisse und die ordnungsgemäße Durchführung der Wartungsarbeiten benötigt werden.

Elektronische Schaltschränke für Elektrosprinklerpumpen der eingangs genannten Art sind aus dem Stand der Technik bekannt. Sie werden in Löschanlagen, insbesondere Sprinkleranlagen, Sprühwasserlöschanlagen und Schaumlöschanlagen und weiteren stationären Löschanlagen mit fluiden Löschmedien eingesetzt. Sie steuern und überwachen im Brandfall das Starten und Stoppen einer Elektrosprinklerpumpe für Löschanlagen. Der Begriff Elektrosprinklerpumpe wird hier synonym für eine durch einen Elektromotor angetriebene Pumpe für Löschanlagen verwendet.

Einen Brand schon in der Entstehungsphase zu bekämpfen ist die beste Voraussetzung, um Menschen, Sachwerte und die Umwelt zu schützen. Löschanlagen, wie z.B. Sprinkleranlagen oder über Brandmelder angesteuerte, übernehmen diese Aufgabe automatisch. Sie erkennen, melden und löschen Feuer selbsttätig und bieten damit zuverlässigen Schutz rund um die Uhr.

Eine Sprinkleranlage durchzieht alle zu schützenden Gebäudeteile mit einem Netz von Rohrleitungen mit Sprinklern, welches in der Regel mit Druckluft oder mit Wasser druckbeaufschlagt ist. In Bereitschaft verschließt eine flüssigkeitsgefüllte Glasampulle den Sprinkler. Überschreitet die Lufttemperatur durch Brandwärme einen festgelegten Schwellenwert, sprengt die sich ausdehnende Flüssigkeit die Ampulle und löst den Sprinkler aus. Über den abfallenden Druck im Rohrnetz wird die Pumpleistung einer Löschwasserpumpe angefordert, die ausreichend Wasser zu den Sprinklern pumpt. Das Löschwasser prallt auf den Sprühteller des Sprinklers, der es gleichmäßig über den Brandherd verteilt. Dabei wird das Feuer im Regelfall schon mit wenigen Sprinklern gelöscht und der Schaden auf ein Minimum reduziert. Gleichzeitig erfolgt die Alarmierung interner und externer Rettungskräfte.

Elementarer Bestandteil von Löschanlagen wie Sprinkleranlagen, Sprühwasser- oder Schaumlöschanlagen ist der Schaltschrank für Elektrosprinklerpumpen. Der Schaltschrank steuert und überwacht das Starten und Stoppen einer durch einen Elektromotor angetriebenen Pumpe für Löschanlagen. Neben dem manuellen Starten und Stoppen der Pumpe, erfolgt ein automatischer Pumpenstart über mindestens einen, aus Sicherheitsgründen aber vorzugsweise über zwei Pumpenstartdruckschalter. Diese Pumpenstartdruckschalter schalten bei Druckabfall in löschfluidführenden Anlagenkomponenten die Sprinklerpumpe ein. Der Druckabfall erfolgt bei Ansteuerung der Löschanlage im Brandfall, z.B. durch das Öffnen eines Sprinklers.

Die Steuerung ist so ausgelegt, dass die Pumpe nach dem Einschalten nach weniger als 15 Sekunden ihre Nennleistung erbringt. Die Pumpe kann während des Betriebes, auch nach Ansprechen der Motorüberwachungseinrichtung, nur manuell über Drucktaster abgeschaltet werden.

Zu den Löschanlagenkomponenten gehören neben den Schaltschränken für Elektrosprinklerpumpen mit den anzusteuernden Pumpen, die fluidspeichernden, fluidführenden und austragenden Einrichtungen wie drucklose und druckbeaufschlagte Vorratsbehälter für Löschfluide, Rohrleitungen, Düsen, Sprinkler, Ventilstationen sowie Ventile, Schieber, Klappen und Hähne und andere für die Funktion der Löschanlage wichtige Armaturen. Mit Schalt- oder Geberelementen an oder in diesen Löschanlagenkomponenten, können diese auf Funktionsfähigkeit, Betriebszustand und Wartungszustand überwacht oder Ansteuerungen vorgenommen werden.

Die Komponenten des Schaltschrankes für Elektrosprinklerpumpen, welche die Energieversorgung, deren Überwachung und das Stoppen und Starten des Elektromotors der Pumpe ermöglichen, wie z.B. Motorüberwachungseinrichtungen und Netzüberwachungseinrichtungen, werden als Komponenten des Leistungsteils des Schaltschrankes bezeichnet. Da diese innerhalb des Schaltschrankes angeordnet sind, werden diese als interne Komponenten definiert. Da sich die Schalt- oder Geberelemente an oder in Löschanlagenkomponenten außerhalb des Schaltschrankes für Elektrosprinklerpumpen befinden, werden diese als externe Schalt- oder Geberelemente bezeichnet.

Stand der Technik ist es, die Steuerung der Sprinklerpumpe in Schütz- und Relaistechnik zu realisieren.

DE 10 2005 024 170 A1 beschreibt eine Brandschutzeinrichtung mit Brandbekämpfungsaggregaten, die ein Brandschutzmittel verteilen, Alarmeinrichtungen, Brandschutzmittel-Fördereinrichtungen sowie mit Mitteln, mit denen die Funktionsfähigkeit der Alarmeinrichtung überprüfbar ist. Als ein solches Mittel wird eine Computereinheit, beschrieben, die mit den Alarmeinrichtungen und/oder Brandschutzmittel-Fördereinrichtungen verbunden ist und die Funktionsprüfung der Alarmeinrichtungen und/oder der Brandschutzmittel-Fördereinrichtungen automatisch durchführt. Diese Brandschutzeinrichtung kann zwar bestimmte Funktionsprüfungen selbst vornehmen, besitzt aber keine Mittel zur direkten Ansteuerung und Überwachung von Elektrosprinklerpumpen und keine Mittel zur Überwachung von Signalleitungen auf Drahtbruch und Kurzschluss, die gleichzeitig Schaltsignale der über diese Signalleitung angeschlossenen Komponenten und/oder Elemente erfasst.

Nachteilig am Stand der Technik ist weiterhin, dass elektronische Schaltschränke für Elektrosprinklerpumpen der eingangs genannten Art, keine Funktionsmodule oder elektronischen Baugruppen enthalten, an welche Brandmelder oder Handfeuermelder angeschlossen werden können und der Schaltschrank über eine integrierte zentrale Steuereinheit die Funktionen einer Brandmelderzentrale realisiert.

Ein weiterer Nachteil am Stand der Technik ist, dass Schaltschränke für Elektrosprinklerpumpen der eingangs genannten Art, kein Ansteuerungsmodul zur Steuerung z.B. von Auslöseelementen, wie Magnetventile oder Steuermagnete von Löschanlagen, wie zum Beispiel in vorgesteuerten Trockenanlagen oder Sprühwasserlöschanlagen, aufweisen, welche gleichzeitig die Steuerleitungen zu diesen Auslöseelementen auf Drahtbruch und Kurzschluss überwachen.

Ein weiterer Nachteil am Stand der Technik ist, dass Schaltschränke für Elektrosprinklerpumpen der eingangs genannten Art keine Mittel aufweisen, die Störungen, Betriebszustände, Wartungsdaten, Wartungsparameter und Wartungshinweise für Löschanlagenkomponenten am Schaltschrank für Elektrosprinklerpumpen und/oder an entfernten Empfangseinrichtungen für den Betreiber der Löschanlage oder z.B. für das Servicepersonal leichter erkennbar und schneller und leichter zugänglich machen.

Das Dokument XP055181565 beschreibt eine Brandmeldezentrale zur Erfassung und Weiterleitung von Brandmeldesignalen, die keine integrierte Leistungskomponente zur Steuerung einer Elektrosprinklerpumpe enthält.

Die Erfindung wird im Hauptanspruch und mit dem Verfahrensanspruch 6 definiert und charakterisiert, während die abhängigen Ansprüche weitere Merkmale der Erfindung beschreiben.

Der Erfindung liegt die Aufgabe zugrunde, einen kompakten und kostengünstigen elektronischen Schaltschrank für Elektrosprinklerpumpen zu schaffen, mit integrierten Funktionsmodulen, welche interne Signalleitungen im Schaltschrank zu internen Komponenten und/oder externe Signalleitungen zu Schalt- oder Geberelementen auf Drahtbruch und Kurzschluss überwachen können und die Funktionsmodule gleichzeitig Schaltsignale der über diese Signalleitung angeschlossenen Komponenten und/oder Elemente erfassen.

Weiterhin liegt der Erfindung die Aufgabe zugrunde, ein Verfahren zur Überwachung und Steuerung von Löschanlagenkomponenten mit einem elektronischen Schaltschrank für Elektrosprinklerpumpen zu schaffen.

Zusätzlich sollen mit der Erfindung Störungen, Betriebszustände, Wartungsdaten, Wartungsparameter und Wartungshinweise, leichter erkennbar und schnell und leichter zugänglich sein.

Die Aufgabe wird durch einen elektronischen Schaltschrank für Elektrosprinklerpumpen für Löschanlagen der eingangs genannten Art dadurch gelöst, dass im Steuerteil eine zentrale Steuereinheit mit Speicher, eine Anzeige- und Bedieneinheit mit einem Display und Anzeige- und Bedienelementen sowie mindestens ein Zustandsüberwachungsmodul und/oder mindestens ein Ringbusteilnehmermodul angeordnet sind. Die zentrale Steuereinheit ist über mindestens einen internen Bus mit dem mindestens einem Zustandsüberwachungsmodul und/oder mit dem mindestens einem Ringbusteilnehmermodul sowie über eine Kommunikationsschnittstelle mit der Anzeige- und Bedieneinheit verbunden.

Das Zustandsüberwachungsmodul kann mit mindestens einer internen Komponente des Leistungsteils über Signalleitungen verbunden sein. Das Zustandsüberwachungsmodul kann zusätzlich oder ausschließlich mit mindestens einem externen Schalt- oder Geberelement über Signalleitungen verbunden sein. Auch das Ringbusteilnehmermodul kann mit mindestens einer internen Komponente des Leistungsteils über Signalleitungen verbunden sein oder zusätzlich oder ausschließlich mit mindestens einem externen Schalt- oder Geberelement über Signalleitungen verbunden sein.

Vorteilhaft ist die Verbindung des Zustandsüberwachungsmoduls und/oder des Ringbusteilnehmermoduls mit den internen Komponenten des Leistungsteils, der Motorüberwachungseinrichtung und zusätzlich oder ausschließlich mit der Netzüberwachungseinheit.

Das Zustandsüberwachungsmodul und/oder das Ringbusteilnehmermodul sind so eingerichtet und ausgebildet, dass diese Module die Signalleitungen auf Drahtbruch und Kurzschluss überwachen sowie die Schaltsignale der mit den Signalleitungen verbundenen internen Komponenten und externen Schalt- oder Geberelementen erfassen.

Schaltsignale sind Signale, die bei Zustandsänderung der mit den Signalleitungen verbundenen internen Komponenten und externen Schalt- oder Geberelementen entstehen. Dies können zum Beispiel Strom- und Spannungsänderungen, Änderungen von optischen Signalen, Widerstandsänderungen, Telegrammänderungen und weitere Änderungen sein.

Die Zuordnung der Komponenten, Elemente und Module zum Steuerteil und zum Leistungsteil ist nur als funktionelle Zuordnung zu verstehen und nicht als örtliche Zuordnung im elektronischen Schaltschrank für Elektrosprinklerpumpen. Dem Leistungsteil sind alle notwendigen Komponenten zur Stromversorgung und Ansteuerung von elektrischen Sprinklerpumpenmotoren für Leistungsstufen im Kilowattbereich zugeordnet.

Der interne Bus kann als paralleles oder serielles Bussystem ausgeprägt sein, oder bei mehreren Bussystemen als Kombination von parallelem und oder seriellem Bussystem realisiert sein. Eine vorteilhafte Ausgestaltung beinhaltet einen CAN-Bus oder ein CANopen-Bus. In einer weiteren vorteilhaften Ausgestaltung ist ein proprietäres Bus-System oder eine Kombination proprietäres Bus-System und CANopen-Bussystem realisiert. Die Aufzählung der Bussysteme stellt aber keine Einschränkung dar, beliebige andere Standardbussysteme sind einsetzbar.

Die zentrale Steuereinheit kann über verschiedene Mittel, einen Personalcomputer, ein Service- oder Programmiertool programmiert und konfiguriert werden. Hierzu wird eine im oder am elektronischen Schaltschrank für Elektrosprinklerpumpen vorhandene Programmierschnittstelle verwendet. Mit diesen Mitteln können z.B. Wartungsdaten für eine oder mehrere Löschanlagenkomponenten, wie ein Datum zur Wartung, eine Betriebsstundenzahl , eine Laufdauer innerhalb eines Beobachtungszeitraumes oder eine Ereignissollzahl für einen Ereigniszähler in einem Speicher der zentralen Steuereinheit im elektronischen Schaltschrank für Elektrosprinklerpumpen gespeichert werden. Die Programmierung der zentralen Steuereinheit leitet dann die vorprogrammierten Folgeaktionen bei Erreichen, Unter- oder Überschreiten dieser Parameter ein. In einer vorteilhaften Ausgestaltung ist die zentrale Steuereinheit so eingerichtet und ausgebildet, dass diese Parameter zusätzlich oder ausschließlich über die Bedienelemente der Anzeige- und Bedieneinheit eingegeben und/oder geändert werden können.

Der Ereigniszähler wird z.B. in einer vorteilhaften Ausführung zum zählen der Anzahl der Aktivierungen einer Pumpe, z.B. der Spinklerpumpe in einem definierten Zeitintervall verwendet. Damit kann beispielsweise festgestellt werden, dass bei einer höheren Anzahl von Ereignissen des Pumpenstarts, die über der vorgegeben Ereignissollzahl liegt, Leckkagen im löschfluidführenden Rohrsystem oder an Armaturen vorliegen, die ein Nachspeisen des Löschfluids durch die Sprinklerpumpe hervorrufen. Dass Servicepersonal kann dann zielgerichtet eingreifen. Diese Aufzählung von Wartungsdaten stellt aber keine Einschränkung dar, andere Wartungsdaten sind auch Bestandteil weiterer Ausführungsvarianten.

In einer weiteren vorteilhaften Ausgestaltung ist die zentrale Steuereinheit so eingerichtet und ausgebildet, dass diese eine redundante Prozessoreinheit aufnehmen kann, welche bei Störung und/oder Ausfall des Hauptprozessors dessen Programm ausführt und somit die Funktionen der zentralen Steuereinheit sicherstellt. Vorteilhaft ist, die Aufnahme der redundanten Prozessoreinheit als Steckkontakte, Buchsen- oder Steckerleiste auszubilden, was eine leichte Nachrüstung oder Austausch ermöglicht.

Das Zustandsüberwachungsmodul und das Ringbusteilnehmermodul sind mit jeweils mindestens einem programmierbaren Mikroprozessor, Speicher und mindestens einem elektronischen Schaltungskreis oder Meßschaltung zur Überwachung von Signalleitungen auf Drahtbruch und Kurzschluss ausgerüstet und weiterhin so eingerichtet und ausgebildet, dass diese Module Schaltsignale von Komponenten und Elementen erfassen, die über Signalleitungen mit dem jeweiligen Modul, dem Zustandsüberwachungsmodul oder dem Ringbusteilnehmermodul verbunden sind. Bei der Erfassung von Schaltsignalen von Brandmeldern, werden die Ereignisse, Brandalarm und Störung erfasst. In einer vorteilhaften Ausführung werden auch Voralarmereignisse erfasst. Brandmelder können automatische Brandmelder sein, wie Rauchmelder, Wärmemelder, Flammenmelder, Funkenmelder, Brandgasmelder, Rauchansaugsysteme oder Handfeuermelder sein.

In einer vorteilhaften Ausführung besteht jedes Zustandsüberwachungsmodul und jedes Ringbusüberwachungsmodul aus mindestens einer elektronischen Flachbaugruppe oder einer anderen Integration von elektronischen Bauelementen, wie beispielsweise einer On-chip (system on chip) Ausführung, die alle notwendigen elektronischen Bauteile und Baugruppen für die Funktionalität des Moduls insbesondere einen Prozessor beinhaltet. Diese Flachbaugruppe ist in einem Gehäuse, z.B. der Modulserie "ME" der "Firma Phoenix Contact" eingesetzt und bildet als Einheit das jeweilige Modul.

Es ist vorteilhaft, das Zustandsüberwachungsmodul und das Ringbusüberwachungsmodul als Hutschienenmodul auszubilden, welches auf eine Hutschiene aufgeschnappt werden kann.

Durch eine Bussystemschnittstelle wird das Zustandsüberwachungsmodul über einen internen Bus mit der zentralen Steuereinheit verbunden. Vorzugsweise ist die Bussystemschnittstelle am Gehäuse angebracht.

Das Zustandsüberwachungsmodul ist beispielsweise über Steckverbinder mit mindestens einer Grenzwertlinie verbunden. Die Grenzwertlinie ist als Verbindungsleitung mit mindestens einem Teilnehmer zu verstehen. Vorzugsweise wird eine zweiadrige Leitung verwendet und bildet mit einem Endwiderstand R_{E} und mindestens einem Teilnehmer einen geschlossenen Stromkreis. Diese Leitung wird im Weiteren auch als Signalleitung bezeichnet. Das Zustandsüberwachungsmodul stellt eine konstante Versorgungsspannung, im Bereich von vorzugsweise 9 V bis 20 V zur Verfügung. Werden mehrere Teilnehmer verwendet, sind diese in Parallelschaltung mit dem Endwiderstand R_{E} als letzten Teilnehmer angeordnet. Die Schaltung der elektronischen Flachbaugruppe des Zustandsüberwachungsmoduls und die Programmierung des zugehörigen Prozessors dieses Moduls ist so eingerichtet und ausgebildet, dass in diesem Stromkreis der Strom gemessen und die gemessenen Ströme entsprechend vorgegebener Grenzwerte bewertet werden. Somit können Signalleitungen auf Drahtbruch und Kurzschluss überwacht werden und Schaltsignale von Teilnehmern, die mit dem Zustandsüberwachungsmodul verbunden sind, erfasst werden.

Es wird der Ruhestrom I₀ und die Stromänderungen gemessen, welche durch angeschlossene Teilnehmer, oder das Zu- oder Abschalten von Teilnehmern und/oder durch Impedanzänderungen bei Drahtbruch oder Kurzschluss der Signalleitungen hervorgerufen werden. Bei Unterschreiten und/oder Erreichen und/oder Überschreiten eines voreingestellten Grenzwertes, in dieser Ausführungsvariante eines Stromgrenzwertes, wird diese Grenzwertmessung vom Zustandsüberwachungsmodul erfasst und über den internen Bus an die zentrale Steuereinheit weitergeleitet.

Mindestens ein Zustandsüberwachungsmodul ist mit mindestens einem Teilnehmer, z.B. einer internen Komponente des Leistungsteils über Signalleitungen verbunden, entweder mit der Motorüberwachungseinrichtung und/oder mit der Netzüberwachungseinheit und/oder mit mindestens einem weiteren Teilnehmer, welcher als externes Schalt- oder Geberelement ausgebildet ist.

Diese über die Signalleitungen angeschlossenen Teilnehmer stellen einen definierten Arbeitswiderstand R_{A} dar, welcher über einen im Ruhezustand oder Normalzustand offenen Relaiskontakt im Ereignisfall oder bei Zustandsänderungen am Teilnehmer in den Stromkreis, parallel zum Endwiderstand R_{E} geschaltet wird. Im Ruhezustand oder Normalzustand ist nur der Endwiderstand R_{E} ausschlaggebend für den gemessenen Ruhestrom I₀. In einer weiteren vorteilhaften Variante der Ausführung ist dieser Arbeitswiderstand R_{A} im Ruhezustand oder Normalzustand parallel zum Endwiderstand R_{E} geschaltet und wird im Ereignisfall oder bei Zustandsänderungen am Teilnehmer über einen öffnenden Kontakt aus dem Stromkreis herausgenommen. Das Modul misst in beiden Varianten die Stromänderung und prüft, ob die voreingestellten Stromgrenzwerte unterschritten und/oder erreicht und/oder überschritten werden.

Für den Fall, dass im Ereignisfall oder bei Zustandsänderungen der Arbeitswiderstand R_{A} über einen schließenden Relaiskontakt parallel zum Endwiderstand R_{E} zugeschalteten wird, und dass die konstante Versorgungsspannung 9V und der Arbeitswiderstand R_{A}=470 Ohm beträgt, wird eine Stromerhöhung von 19 mA im Zustandsüberwachungsmodul gemessen. Wenn der Endwiderstand R_{E} = 1,8 Kiloohm beträgt, dann beträgt der Ruhestrom I₀ = 5 mA. Diese Grenzwertmessung, das Erreichen eines voreingestellten Stromgrenzwertes 19 mA der Stromerhöhung in Bezug auf den Ruhestrom I₀ oder des voreingestellten Stromgrenzwertes für den gesamten Strom von 24 mA wird nun über die zentrale Steuereinheit entsprechend der Konfigurierung und entsprechend der eingestellten und gespeicherten Parameter erfasst und einem bestimmten Ereignis für einen bestimmten Teilnehmer zugeordnet und an der Anzeige- und Bedieneinheit angezeigt. Zusätzlich oder alternativ kann die zentrale Steuereinheit Folgeaktionen auslösen.

Bei Veränderungen des Eigenwiderstandes der Signalleitungen, z.B. bei Widerstandserhöhung durch Korrosion an Kontaktstellen oder Drahtbruch, verringert sich der vom Zustandsüberwachungsmodul gemessene Strom. Als Grenzwert für Drahtbruch ist z.B. der Grenzwert I_{DB} = 3mA für den Gesamtstrom festgelegt. Wird dieser Grenzwert erreicht oder unterschritten werden über die zentrale Steuereinheit entsprechend der Konfigurierung und entsprechend der eingestellten und gespeicherten Parameter der Drahtbruch an der Anzeige- und Bedieneinheit angezeigt und Folgeaktionen ausgelöst. In einer vorteilhaften Ausführung wird die vom Drahtbruch betroffene Signalleitung benannt.

Bei Veränderungen des Eigenwiderstandes der Signalleitungen, z.B. bei Widerstandsverringerung durch Kurzschluss zwischen den Adern der zweiadrigen Signalleitung, vergrößert sich der vom Zustandsüberwachungsmodul gemessene Strom. Als Grenzwert für Kurzschluss ist z.B. der Grenzwert I_{KS} = 90 mA für den Gesamtstrom festgelegt. Wird dieser Grenzwert erreicht oder überschritten werden über die zentrale Steuereinheit entsprechend der Konfigurierung und entsprechend der eingestellten und gespeicherten Parameter der Kurzschluss an der Anzeige- und Bedieneinheit angezeigt und Folgeaktionen ausgelöst. In einer vorteilhaften Ausführung wird die vom Kurzschluss betroffene Signalleitung benannt. Die aufgeführten Spannungs- und Stromwerte sind nur Beispiele, andere Auslegungen und Werte werden in anderen vorteilhaften Ausführungen verwendet.

In einer weiteren vorteilhaften Ausführung des Zustandsüberwachungsmoduls wird ein konstanter Versorgungsstrom zur Verfügung gestellt und die entsprechenden, sich ergebenden Änderungen der Spannung bei Drahtbruch oder Kurzschluss der Signalleitungen oder beim Zufügen oder Entfernen des Arbeitswiderstandes durch einen öffnenden oder schließenden Relaiskontakt gemessen und auf Erreichen und/oder Überschreiten und/oder Unterschreiten von Grenzwerten überwacht.

Das Ringbusteilnehmermodul ist beispielsweise über Steckverbinder mit mindestens einer Teilnehmerschleife verbunden. Über eine Verbindungsleitung, eine Signalleitung, welche sowohl die Energieversorgung als auch die Datenübertragung sicherstellt, sind einzeladressierbare Teilnehmer angeschlossen. Diese Verbindungsleitungen werden im weiteren als Signalleitungen bezeichnet. Adressierbare Teilnehmer sind z.B. externe Schalt- oder Geberelemente und/oder interne Komponenten des Leistungsteils mit integrierten Ringbuskommunikationsmodulen, welche Schaltsignale, insbesondere das Öffnen oder Schließen von Kontakten oder optische Schaltsignale als Resultat der Zustandsänderung der Schalt- oder Geberelemente erfassen, und diese Schaltsignale mit der eingestellten Adresse des Schalt- oder Geberelementes oder der internen Komponente über die Signalleitung mit Hilfe eines Datenübertragungsprotokolls an das Ringbusteilnehmermodul überträgt. Die Signalleitung ist vorzugsweise als Zweidrahtleitung ausgebildet. Sie kann aber auch mehrere Leitungen aufweisen. Adressierbare Teilnehmer können auch Brandmelder, Gefahrenmelder und Aktoren sein.

Die Signalleitung ist in einer vorteilhaften Ausführung als geschlossene Ringbusleitung ausgeführt. Diese hat den Vorteil, dass bei Unterbrechung dieser Signalleitung, z.B. bei Drahtbruch, die Energieversorgung und die Kommunikation mit den adressierbaren Teilnehmern von beiden Seiten des ehemaligen Ringes über das Ringbusteilnehmermodul sicher gestellt wird. In einer weiteren vorteilhaften Ausführung ist diese Signalleitung als eine Stichleitung für adressierbare Teilnehmer ausgelegt.

Die Schaltung der elektronischen Flachbaugruppe des Ringbusteilnehmermoduls und die Programmierung des zugehörigen Prozessors dieses Moduls sind so eingerichtet und ausgebildet, dass die Signalleitungen kontinuierlich oder in regelmäßigen Zeitabständen auf Drahtbruch und Kurzschluss untersucht werden. Wird ein Drahtbruch oder Kurzschluss festgestellt, wird dies über die Busverbindung zur zentralen Steuereinheit gesendet, das Ereignis im Speicher abgelegt und die zentrale Steuereinheit steuert die Anzeige des Drahtbruchs oder des Kurzschlusses an der Anzeige- und Bedieneinheit.

Durch eine Bussystemschnittstelle wird das Ringbusteilnehmermodul über einen internen Bus mit der zentralen Steuereinheit verbunden. Vorzugsweise ist die Bussystemschnittstelle am Gehäuse des Moduls angebracht. In einer vorteilhaften Ausführung ist der interne Bus identisch mit dem internen Bus mit welchem die Zustandsüberwachungsmodule mit der zentralen Steuereinheit verbunden sind. In einer weiteren vorteilhaften Ausführung ist der interne Bus der Anbindung des Ringbusteilnehmermoduls ein CANopen Bus und der interne Bus, mit welchem die Zustandsüberwachungsmodule mit der zen-tralen Steuereinheit verbunden sind, ein proprietärer Bus.

Die Datenkommunikation zwischen dem Ringbusteilnehmermodul und den adressierbaren Teilnehmern erfolgt in einer vorteilhaften Ausführung über die Signalleitungen und über eine Datentransfersteuerung, vorzugsweise in bitserieller Form und im Halbduplex-Verfahren. Dabei sind die Dateninformationen auf die von dem Ringbusteilnehmermodul bereitgestellte Versorgungsspannung aufmoduliert.

Die Zustandsüberwachungs- und die Ringbusteilnehmermodule sind in einer weiteren vorteilhaften Weise so eingerichtet und ausgelegt, dass sie durch die Programmierung des zugehörigen Prozessors und der Auslegung der Meßschaltung, Strom- und/oder Spannungsänderungen, oder Änderungen von optischen Signalen, oder Widerstandsänderungen, oder Telegrammänderungen, oder Magnetfeldänderungen zur Erfassung der Schaltsignale verarbeiten können.

Der elektronische Schaltschrank für Elektrosprinklerpumpen hat zur Meldungsanzeige und Bedienung eine Anzeige- und Bedieneinheit. Meldungen werden auf einem Display dargestellt und/oder durch Anzeigeelemente angezeigt. Das Display ist als Flüssigkristallbildschirm (LCD) ausgeführt. Andere Standard- und Sonderdisplays sind vorteilhafte Varianten der Ausführung. Vorteilhaft ist die Anordnung eines grafikfähigen Displays zur Darstellung von Zeichen und Symbolen.

Die Anzeigeelemente sind als LED's ausgeführt. Sie können aber auch als Glimm- oder Glühlampen ausgebildet sein. Zur akustischen Anzeige ist in der Anzeige- und Bedieneinheit ein Summer integriert. Der Summer kann aber auch als separates Gerät im elektronischen Schaltschrank für Elektrosprinklerpumpen eingebaut sein. Bedienungen des elektronischen Schaltschrankes für Elektrosprinklerpumpen und ihrer Komponenten werden durch Bedienelemente durchgeführt. Dies erfolgt mittels Taster mit festen, voreingestellten Funktionen oder mittels Softkeys und einem Bedienermenü, welches auf dem Display dargestellt wird.

Die verwendeten externen Schalt- oder Geberelemente, die über Signalleitungen mit dem Zustandsüberwachungsmodul und/oder mit dem Ringbusteilnehmermodul verbunden sind, und deren Schaltsignale erfasst werden, umfassen einzeln oder in beliebiger Kombination und Anzahl folgende Komponenten:
- Endschalter für die Positionserfassung von z.B. Kugelhähnen, von Absperrschiebern, von Absperrklappen, von Schiebern allgemein;
- Druckschalter für Luftdruckmessung, z.B. im Druckluftwasserbehälter oder im Trockenrohrnetz;
- Schwimmerschalter für Füllstandsmessungen in Druckluftwasserbehältern, drucklosen Wasserbehältern und anderen Gefäßen zur Löschfluidbevorratung;
- Temperaturschalter, beispielsweise für die Überwachung der Umgebungstemperatur in der Sprinklerzentrale;
- Pumpendruckschalter zum starten des Sprinklerpumpenmotors bei Druckabfall im löschfluidführenden Rohrleitungsnetz oder in einer Armatur;
- Brandmelder wie automatische Brandmelder oder Handfeuermelder sowie Gefahrenmelder zur Erfassung von Ereignismeldungen, Feuermeldungen und Störungen.

Diese Aufzählung ist beispielhaft, in Ausführungsvarianten können weitere übliche Schalt- oder Geberelemente zur Anwendung kommen.

Mit Hilfe dieser Schalt- oder Geberelemente kann sowohl mit dem Ringbusteilnehmermodul als auch mit dem Zustandsüberwachungsmodul eine Zustandsüberwachung wie zum Beispiel Betriebsstellungen von Absperrschiebern oder Kugelhähnen, Füllstände, Temperaturen, Drücke, und dergleichen von Löschanlagen erfasst, ausgewertet und weitergemeldet werden sowie über die zentrale Steuereinheit Folgeaktionen eingeleitet werden.

Für die Energieversorgung des Steuerteils mit seinen Komponenten und Modulen ist ein Netzteil und eine Notstromversorgung als wiederaufladbare Batterie angeordnet. Fällt die externe Energieversorgung zum Primärteil des Netzteiles aus, schaltet dieses automatisch auf die Notstromversorgung, die wiederaufladbaren Batterien um, welche beispielsweise für mindestens 30 oder 72 Stunden zur Verfügung steht. Steht die Hauptenergiequelle wieder zur Verfügung, d.h. liegt am Netzteil primärseitig die erforderliche Versorgungsspannung an, wird automatisch auf die externe Energieversorgung über das Netzteil zurückgeschaltet.

In einer weiteren vorteilhaften Ausführung ist der elektronische Schaltschrank für Elektrosprinklerpumpen so eingerichtet und ausgebildet, dass bei Bedarf der Funktionserweiterung, ohne Änderung der bisherigen inneren Verdrahtung weitere Funktionsmodule nachgerüstet werden können. Im erfindungsgemäßen elektronischen Schaltschrank für Elektrosprinklerpumpen können aber auch bei der Erstellung und Installation in der Löschanlage gleich weitere Funktionsmodule angeordnet sein. Zu den weiteren Funktionsmodulen gehören ein Relaismodul, ein Ansteuerungsmodul, ein Kommunikationsmodul und ein Vernetzungsmodul. In Varianten der erfindungsgemäßen Lösung sind ein oder mehrere Funktionsmodule gleicher Bauart in beliebiger Kombination mit einem oder mehreren Funktionsmodulen anderer Bauart angeordnet, z.B. drei Relaismodule und vier Ansteuerungsmodule in Kombination mit mindestens einem Zustandsüberwachungsmodul und/oder mit mindestens einem Ringbusteilnehmermodul.

Die Bestandteile der Steuereinheit, Anzeige- und Bedieneinheit, zentrale Steuereinheit, Zustandsüberwachungsmodul, Ringbusteilnehmermodul, Ansteuerungsmodul, Relaismodul sowie das Netzteil sind so ausgelegt, eingerichtet und ausgebildet, dass der erfindungsgemäße elektronische Schaltschrank für Sprinklerpumpen zusätzlich auch als Brandmelderzentrale und/oder als Löschsteuerzentrale eingesetzt werden kann.

Das Relaismodul und das Ansteuerungsmodul sind wie das Zustandsüberwachungs- und Ringbusteilnehmermodul über mindestens einen internen Bus mit der zentralen Steuereinheit zum Datenaustausch, Steuern und Regeln interaktiv verbunden. Das Kommunikations- und Vernetzungsmodul sind jeweils mit einer entsprechenden Kommunikationsschnittstelle mit der zentralen Steuereinheit verbunden.

Das Ansteuerungsmodul steuert externen Komponenten, wie z.B. Magnetventile oder akustische Signalgeber an. Die externen Komponenten sind mit dem Ansteuerungsmodul über Steuerleitungen verbunden, über welche die erforderliche Betriebsspannung für die Funktion und Aktivierung der externen Komponenten vom Ansteuerungsmodul im Ansteuerungsfall zur Verfügung gestellt wird. Die Steuerleitungen zu diesen externen Komponenten werden durch das Ansteuerungsmodul auf Drahtbruch und Kurzschluss überwacht. Die Überwachung umfasst zusätzlich das Vorhandensein und den ordnungsgemäßen Zustand der angeschlossenen externen Komponenten. Externe Komponenten können zum Beispiel Magnetventile, Hupen, Blitzleuchten, Steuermagneten, Schützspulen, Motoren und vergleichbare Geräte sein, die eine entsprechende hohe Stromaufnahme von beispielsweise 0,1 bis 3,0 Ampere haben. In einer Variante der erfindungsgemäßen Lösung wird das Starten des Sprinklerpumpenmotors mit einer akustischen Alarmierung begleitet. Das Ansteuerungsmodul schaltet hierbei beispielsweise ein akustisches Alarmmittel, eine Hupe ein.

In einer weiteren Ausführung ist der elektronische Schaltschrank für Elektrosprinklerpumpen Bestandteil einer Sprühwasserlöschanlage. Bei Detektion eines Brandes, erfasst ein Zustandsüberwachungsmodul oder ein Ringbusteilnehmermodul das Schaltsignal des Brandmelders, danach wird über die zentrale Steuereinheit ein Befehl an das Ansteuerungsmodul gesendet, welches dann ein Magnetventil an einem Sprühwasserventil schaltet und damit das Löschfluid, in diesem Fall Wasser, freigegeben wird, und über die Düsen zum Löschen des Feuers gelangt. Gleichzeitig oder bedarfsgesteuert wird die Elektrosprinklerpumpe gestartet, um das Löschwasser in ausreichender Menge bereitzustellen. In dieser Ausführungsvariante, ist der elektronische Schaltschrank für Elektrosprinklerpumpen zusätzlich als Brandmelderzentrale und Löschsteuerzentrale ausgebildet.

Das Relaismodul dient zur Steuerung von Relais, vorzugsweise von maximal acht Relais mit jeweils einem potentialfreien Kontakt. Diese acht Relais werden durch den in der Schaltung des Relaismoduls integrierten Mikroprozessor gesteuert. Alle Befehle an das Relaismodul und Meldungen des Moduls werden durch die zentrale Steuereinheit verarbeitet. Das Modul ist eingeschränkt autark, d.h. bestimmte Funktionen werden nicht durch das zentrale Rechensystem gesteuert, werden aber durch dieses angestoßen. Eine solche Funktion ist z.B. der Impulsbetrieb des Moduls. In diesem Modus ist das Modul in der Lage Impulsmuster mit sehr kurzen Intervallen zu erzeugen.

Über das Relaismodul werden Schaltvorgänge realisiert, beispielesweise die Zuschaltung der Steuerspannung zum Motorschalter zum Starten der Sprinklerpumpe, wenn ein entsprechendes Ereignis vorliegt.

Zur Datenübertragung und Kommunikation mit anderen Systemen und Anlagen außerhalb des elektronischen Schaltschrankes für Elektrosprinklerpumpen, wie zum Beispiel Fernwarten, Gebäudeleitsysteme, Einsatzleitstellen, andere Sicherheitstechnische Einrichtungen, Fernanzeige- und Diagnosegeräte/-systeme und andere entfernte Empfangs- und/oder Steuereinrichtungen wird ein Kommunikationsmodul im elektronischen Schaltschrank für Elektrosprinklerpumpen eingesetzt. Zur Vernetzung mit anderen elektronischen Schaltschränken für Elektrosprinklerpumpen oder mit Brandmelderzentralen wird ein Vernetzungsmodul eingesetzt.

Das Kommunikationsmodul und das Vernetzungsmodul kann Schnittstellen in unterschiedlicher Ausführung beinhalten wie zum Beispiel Schnittstellen mit RS232 Standard, RS422 Standard, RS 485 Standard, USB oder auch Ethernet oder optische Schnittstellen. Das Kommunikationsmodul und das Vernetzungsmodul sind über eine entsprechende korrespondierende Kommunikationsschnittstelle mit der zentralen Steuereinheit verbunden. In einer vorteilhaften Ausführung ist das Kommunikationsmodul mit einer Ethernetschnittstelle ausgerüstet. Somit können z.B. über einen im Kommunikationsmodul integrierten Webserver aktuellen Zustände des elektronischen Schaltschrankes für Elektrosprinklerpumpen und dessen interner und externer Komponenten und Schalt- und Geberelementen sowie Daten aus dem Speicher der zentralen Steuereinheit an entfernte Empfangseinrichtungen gesendet werden. Dies können zum Beispiel ein Smartphone, ein Personalcomputer, ein Tablet-PC und ähnliche Geräte sein.

In einer weiteren vorteilhaften Ausführung wird das Vernetzungsmodul für die Vernetzung mit anderen Schaltschränken und/oder mit Brandmelder- und/oder Löschsteuerzentralen eingesetzt, welche die gleichen Vernetzungsmodule unterstützen und aufweisen.

Zur Verbesserung der Wartungsabläufe und der Information an Betreiberpersonal und/oder Servicepersonal ist es vorteilhaft Wartungsdaten am elektronischen Schaltschrank für Elektrosprinklerpumpen anzuzeigen und auch bei Bedarf diese an entfernte Empfangsgeräte zu senden.

Wartungsvorschrift erfordern, dass bestimmte Wartungsschritte in einem vorgegeben Zeitraum mit einer definierten Häufigkeit durchgeführt werden müssen. Mit dem Ereigniszähler kann die Anzahl der Durchführung des Wartungsschrittes erfasst werden und die Einhaltung der vorgegeben Ereignissollzahl dieser Wartungsereignisse überwacht werden. Durch die Speicherung der Wartungsdaten im Speicher der zentralen Steuereinheit, sind sie dauerhaft dokumentiert und jederzeit abrufbar.

Zu den Wartungsdaten gehören auch Wartungsparametern wie z.B. Zeitintervalle, maximale und minimale Werte und Wartungshinweise. Dies sind z.B. bei einem Wartungsdatum die Anzahl der Tage nach diesem Datum und die Anzahl der Tage vor diesem Datum, oder die Anzahl von Stunden bei überschreiten oder unterschreiten der vorgegeben Sollstundenzahl für Betriebsstunden einer Komponente oder eines Aggregates wie z.B. eines Kompressors, bei welchem die zentrale Steuereinheit entsprechende Anzeigen generiert und/oder Folgeaktionen einleitet.

Eine vorteilhafte Ausgestaltung der Erfindung zeichnet sich dadurch aus, dass der Speicher der zentralen Steuereinheit Wartungsdaten, vorzugsweise ein Datum zur Wartung für mindestens eine Löschanlagenkomponente und/oder mindestens eine Betriebsstundenzahl für mindestens eine Löschanlagenkomponente und/oder mindestens eine Laufdauer für mindestens eine Löschanlagenkomponente innerhalb eines Beobachtungszeitraumes enthält und die zentrale Steuereinheit so eingerichtet und ausgebildet ist, dass sie bei Erreichen, und/oder Überschreiten, und/oder Unterschreiten des Datums zur Wartung für mindestens eine Löschanlagenkomponente und/oder der Betriebsstundenzahl für mindestens eine Löschanlagenkomponente und/oder der Laufdauer für eine Löschanlagenkomponente innerhalb eines Beobachtungszeitraumes und/oder eine Ereignissollzahl die Anzeige- und Bedieneinheit für eine alphanumerische Anzeige und /oder graphische Anzeige auf dem Display und/oder für einen optische Anzeige mit den Anzeigeelementen ansteuert.

Damit ist der elektronische Schaltschrank für Elektrosprinklerpumpen mit Zeitgebern, Laufzeitüberwachungen, Betriebsstunden- und Ereigniszählern ausgestattet, und somit mit konkreten Wartungsanforderungen wie das Datum zur Wartung benannter Löschanlagenkomponenten, wie die Betriebsstundenzahl für benannte Löschanlagenkomponente oder wie Laufdauer für eine Löschanlagenkomponente innerhalb eines Beobachtungszeitraumes oder einer Ereignissollzahl zur Erinnerung an Wartungstermine und zur Unterstützung und Überwachung der Wartungsarbeiten ausgerüstet. Diese Ereignisse, sowie die Rücksetzung der Meldungen bei erfolgter Wartung und die Eingabe neuer Daten nach erfolgter Wartung durch das Servicepersonal werden in einer vorteilhaften Ausführung im Speicher der zentralen Steuereinheit hinterlegt.

Die alphanumerische Anzeige der Wartungsanforderung kann im Klartext erfolgen, welche bei der Konfigurierung innerhalb einer vorgegebenen Zeichenanzahl frei vorgegeben werden kann. Dies kann zum Beispiel die Meldung sein "Wartung Kompressor am 29.09.2012". Für die graphische Anzeige ist es vorteilhaft ein Smiley auf dem Display darzustellen, einen "unglücklichen" Smiley für den Fall dass eine Wartungsanforderung erreicht oder schon überschritten wurde. Nachdem Wartungsanforderungen nach erfolgter Wartung aktualisiert wurden, wird auf dem Display ein "glücklicher" Smiley dargestellt. Die alphanumerische Anzeige und /oder graphische Anzeige der Wartungsanforderungen und/oder Daten aus dem Speicher können über ein Kommunikationsmodul an entfernte Empfangseinrichtungen gesendet werden, um z.B. Servicepersonal zeitnah über Wartungsanforderungen zu informieren.

Eine weitere vorteilhafte Ausgestaltung der Erfindung zeichnet sich dadurch aus, dass die zentrale Steuereinheit einen Ereignisspeicher aufweist, welcher vorzugsweise nicht löschbar ist und neben den Wartungsanforderungen und deren Erledigungsdaten alle von der zentralen Steuereinheit erfassten Ereignisse und Störungen beinhaltet.

Eine Variante der Ausgestaltung der Erfindung sieht vor, dass zusätzlich ein Kommunikationsmodul und/oder ein Relaismodul und/oder ein Ansteuerungsmodul zur Steuerung im elektronischen Schaltschrank für Elektrosprinklerpumpen angeordnet ist.

Eine weitere vorteilhafte Ausgestaltung der Erfindung zeichnet sich dadurch aus, dass mindestens ein Kommunikationsmodul im elektronischen Schaltschrank für Elektrosprinklerpumpen angeordnet ist, welches über eine Kommunikationsschnittstelle mit der zentralen Steuereinheit verbunden ist, wobei das Kommunikationsmodul so eingerichtet und ausgebildet ist, dass es Daten aus dem Speicher der zentralen Steuereinheit an entfernte Nutzer oder an mindestens eine entfernte Empfangs- und/oder Steuereinrichtung drahtlos oder drahtgebunden überträgt. Es können aber auch zusätzlich Steuerbefehle von entfernten Empfangs- und/oder Steuereinrichtung vom Kommunikationsmodul empfangen werden.

Die Aufgabe der Erfindung wird außerdem durch ein Verfahren der eingangs genannten Art dadurch gelöst, dass mindesten ein Zustandsüberwachungsmodul und/oder das mindestens ein Ringbusteilnehmermodul über Signalleitungen zu mindestens einer internen Komponente des Leistungsteils und zu mindestens einem externen Schalt- oder Geberelement, die Schaltsignale der mit den Signalleitungen verbundenen internen Komponenten und externen Schalt- oder Geberelementen erfasst und gleichzeitig die Signalleitungen auf Drahtbruch und Kurzschluss überwacht. Hierbei fragt eine zentrale Steuereinheit mit Speicher über mindestens einen internen Bus die erfassten Schaltsignale und das Ergebnis der Überwachung der Signalleitungen auf Drahtbruch und Kurzschluss ab und speichert dies. Anschließend leitet die zentrale Steuereinheit über den mindestens einen internen Bus, der mit den Funktionsmodulen verbunden ist Folgeaktionen ein und steuert diese. Zusätzlich oder alternativ steuert die zentrale Steuereinheit über eine Kommunikationsschnittstelle die Anzeige- und Bedieneinheit an und generiert eine Anzeige. Dies ist vorzugsweise eine alphanumerische Anzeige oder einen graphische Anzeige auf dem Display oder eine optische Anzeige mit den Anzeigeelementen der Anzeige- und Bedieneinheit. Auch beliebige Kombinationen der verschieden Anzeigearten kommen zur Anwendung. Folgeaktion werden in dieser Variante über ein Relaismodul und/oder ein Ansteuerungsmodul eingeleitet.

Zusätzlich oder alternativ leitet die zentrale Steuereinheit Folgeaktionen über eine Kommunikationsschnittstelle ein, welche die zentrale Steuereinheit mit einem Kommunikationsmodul verbindet und steuert diese Folgeaktionen. Die Folgeaktion für diese Variante kann z.B. die Übertragung von Daten, von Wartungsdaten oder Ereignisdaten oder Störungsdaten aus dem Speicher der zentralen Steuereinheit an entfernte Empfangseinrichtungen sein.

Die Aufgabe der Erfindung wird außerdem durch eine erste Variante des Verfahrens der eingangs genannten Art dadurch gelöst, dass die Löschanlagenkomponente Pumpenstartdruckschalter überwacht wird. Hierbei wird das Schaltsignal durch den öffnenden oder schließenden Kontakt mindestens eines Pumpenstartdruckschalters von mindestens einem Zustandsüberwachungsmodul erfasst, danach überträgt das Zustandsüberwachungsmodul dieses Ereignis über den internen Bus an die zentrale Steuereinheit. Die zentrale Steuereinheit 21 steuert daraufhin über den internen Bus ein Relaiskontakt eines Relaismoduls und dieser Relaiskontakt schaltet eine Steuerspannung zum Motorstarter und startet den Sprinklerpumpenmotor.

Eine vorteilhafte Ausgestaltung des Verfahrens zeichnet sich dadurch aus, dass bei Feststellung eines Drahtbruchs oder Kurzschlusses der Signalleitungen diese Störung an der Anzeige- und Bedieneinheit alphanumerisch und/oder graphisch auf dem Display und/oder optisch mit den Anzeigeelementen angezeigt wird.

Eine weitere vorteilhafte Ausgestaltung des Verfahrens zeichnet sich dadurch aus, dass eine zusätzliche Überwachung von Löschanlagenkomponenten stattfindet, indem die zentrale Steuereinheit aus dem Speicher Wartungsdaten, mindestens ein Datum zur Wartung für mindestens eine Löschanlagenkomponente und/oder mindestens eine Betriebsstundenzahl für mindestens eine Löschanlagenkomponente und/oder mindestens eine Laufdauer für mindestens eine Löschanlagenkomponente innerhalb eines Beobachtungszeitraumes und/oder eine Ereignissollzahl ausliest und diese auf Erreichung, Überschreitung oder Unterschreitung überprüft. Bei Erreichen, und/oder Überschreiten, und/oder Unterschreiten der Wartungsdaten steuert die zentrale Steuereinheit die Anzeige- und Bedieneinheit für eine alphanumerische Anzeige und /oder graphische Anzeige auf dem Display und/oder eine optische Anzeige mit den Anzeigeelementen an.

Eine weitere vorteilhafte Ausgestaltung des Verfahrens zeichnet sich dadurch aus, dass als Folgeaktion ein Kommunikationsmodul Daten aus dem Speicher der zentralen Steuereinheit an entfernte Empfangseinrichtungen drahtlos oder drahtgebunden überträgt. Dies ermöglicht eine zeitnahe Information des Servicepersonals.

Weitere vorteilhafte oder zweckmäßige Merkmale und Ausgestaltungen der Erfindung ergeben sich aus den Unteransprüchen sowie aus der Beschreibung. Eine besonders bevorzugte Ausführungsform wird anhand der beigefügten Zeichnungen näher erläutert. In den Zeichnungen zeigen:
- Fig. 1: eine schematische Darstellung des elektronischen Schaltschrankes für Elektrosprinklerpumpen für Löschanlagen,
- Fig. 2: eine schematische Darstellung der signaltechnischen Verbindung eines Zustandsüberwachungsmoduls und eines Ringbusteilnehmermoduls des elektronischen Schaltschrankes für Elektrosprinklerpumpen mit externen Schalt- und Geberelementen,
- Fig. 3: eine beispielhafte schematische Darstellung des Messkreises eines Zustandsüberwachungsmoduls zur Erfassung eines Schaltsignals eines externen Schalt- und Geberelementes,
- Fig. 4: eine beispielhafte schematische Darstellung der Ansteuerung eines Magnetventiles durch das Ansteuerungsmodul,
- Fig. 5: eine schematische Darstellung der funktionellen Einbindung eines Kommunikationsmoduls und eines Vernetzungsmoduls.

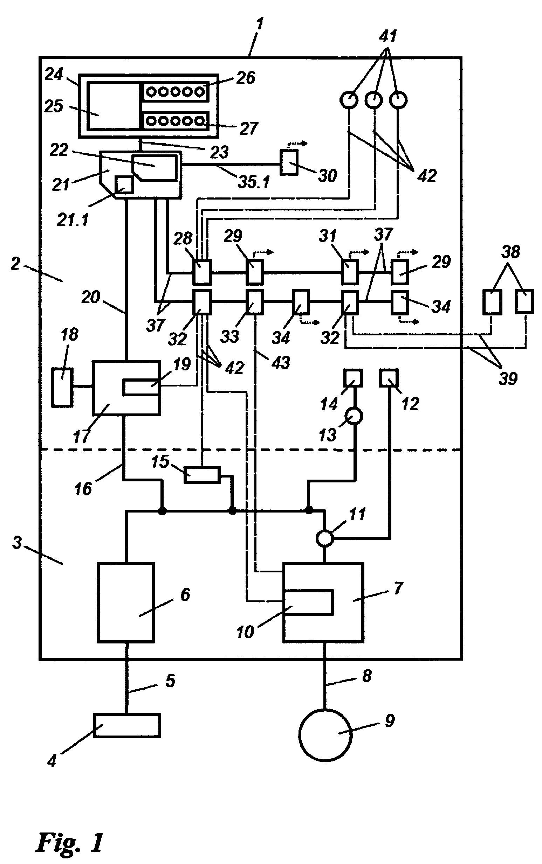

Fig. 1 zeigt die schematische Darstellung des elektronischen Schaltschrankes für Elektrosprinklerpumpen 1 für Löschanlagen. Der Schaltschrank ist unterteilt in einen Steuerteil 2 und einen Leistungsteil 3 mit internen Funktionskomponenten. Der Schaltschrank ist als kompakte Einheit ausgeführt, vorteilhafter Weise in einem Stahlblechgehäuse. Andere Ausführungen des Gehäuses bestehen aus Kunststoff oder anderen geeigneten Materialien.

Im Leistungsteil 3 erfolgt von einer externen Energieversorgung 4 die Einspeisung über ein Versorgungskabel 5 zum elektronischen Schaltschrank für Elektrosprinklerpumpen 1 und versorgt diesen mit Spannung. Die externe Energieversorgung 4 kann dabei das öffentliche Stromversorgungsnetz oder auch alternative Stromerzeugungsanlagen sein wie z.B. Blockheizkraftwerke, Diesel getriebene Ersatzstromversorger und andere. In einer vorteilhaften Ausführung wird der Anschluss an ein 400 V, 50 Hz - Drehstromnetz realisiert, welcher die primäre Netz- und Steuerspannung für den elektronischen Schaltschrank für Elektrosprinklerpumpen 1 bereitstellt.

Die Verbindung von der Energieversorgung 4 bis zum Sprinklerpumpenmotor 9 bildet den Hauptstromkreis. Innerhalb des elektronischen Schaltschrankes für Elektrosprinklerpumpen 1 ist die Spannungsversorgung im Leistungsteil 3 über einen Hauptschalter 6 geführt, der auch als Sicherungslasttrennschalter ausgeführt sein kann. Vom Hauptschalter 6 geht der Hauptstromkreis zum Motorstarter 7 der die Spannung über die Stromversorgungsleitung 8 zum Sprinklerpumpenmotor 9 durchschaltet wenn aus dem Steuerteil 2 das Startsignal über die Signalleitung 43 zum Motorstarter 7 erfolgt.

In dieser in Fig. 1 dargestellten Ausführung, wird ein Schaltsignal durch den öffnenden oder schließenden Kontakt von einem oder beiden dargestellten Pumpenstartdruckschalters 38 von einem Zustandsüberwachungsmodul 32 erfasst. Danach überträgt das Zustandsüberwachungsmodul 32 dieses Ereignis über den internen Bus 37 an die zentrale Steuereinheit 21 und die zentrale Steuereinheit 21 steuert über den internen Bus 37 ein Relaiskontakt eines Relaismoduls 33, welcher eine Steuerspannung zum Motorstarter 7 schaltet und den Sprinklerpumpenmotor 9 startet.

Hierbei erfolgt die Schaltsignalerfassung des Pumpenstartdruckschalters 38 über die Signalleitungen 42, welche vom Zustandsüberwachungsmodul 32 auf Drahtbruch und Kurzschluss überwacht werden. In einer nicht dargestellten Ausführungsvariante wird aus Sicherheits- und Redundanzgründen das Schaltsignal des ersten Pumpenstartdruckschalters 38 von dem Zustandsüberwachungsmodul 32 erfasst und das Schaltsignal von dem zweiten Pumpenstartdruckschalters 38 von einem zweiten, baugleichen Zustandsüberwachungsmodul 32. Durch die Bereitstellung einer Notstromversorgung kann auf die aufwendige Installation von Netzersatz-Druckschaltern mit bauseitiger Verkabelung verzichtet werden.

In einer weiteren nicht dargestellten vorteilhaften Ausführung, wird ein Schaltsignal durch den öffnenden oder schließenden Kontakt eines oder zweier Pumpenstartdruckschalters 38 von mindesten einem Zustandsüberwachungsmodul 32 erfasst, danach überträgt das Zustandsüberwachungsmodul 32 dieses Ereignis über den internen Bus 37 an die zentrale Steuereinheit 21 und die zentrale Steuereinheit 21 steuert über den internen Bus 37 ein Ansteuerungsmodul 34 an, welches die Zuschaltung einer Steuerspannung zum Motorstarter 7 realisiert und den Sprinklerpumpenmotor 9 startet. Diese Lösung hat den Vorteil, dass das Ansteuerungsmodul 34, die Signalleitung 43 zusätzlich auf Drahtbruch und Kurzschluss überwacht.

Bestandteil des in Fig. 1 dargestellten Motorstarters 7 ist die Motorüberwachungseinrichtung 10, die als Überstromrelais ausgeführt ist. Über Stromwandler 11 im Hauptstromkreis des Leistungsteiles 3 erfolgt eine Strommessung des Betriebsstromes des Sprinklerpumpenmotors 9 und wird am Amperemeter 12 angezeigt. Zur Spannungsmessung des Hauptstromkreises durch den Bediener ist ein Voltmeter 14 vorhanden, an dem mit Hilfe des Voltmeterumschalters 13 die verschiedenen Leiterspannungen gemessen und angezeigt werden können. Zur elektronischen Überwachung der Spannungsversorgung des Hauptstromkreises ist eine Netzüberwachungseinheit 15 angeordnet, welche durch den Steuerteil 2 überwacht und ausgewertet wird. Die Motorüberwachungseinrichtung 10 ist in einer Ausführungsvariante als Thermistorschutz für die Motorwicklungen der Sprinklerpumpe ausgebildet. Die Netzüberwachungseinheit 15 überwacht die primäre Netz- und Steuerspannung, die dem elektronischen Schaltschrank für Elektrosprinklerpumpen zugeführt wird auf symmetrischen und asymmetrischen Ausfall der Außenleiter und des Neutralleiters sowie auf symmetrischen oder asymmetrischen Spannungsabfall, wobei z.B. ein Spannungsabfall größer 10 % als eine Störung "Netzspannung" angezeigt wird.

Für die Energieversorgung der Komponenten des Steuerteils 2 und die Bereitstellung der erforderlichen niedrigeren Betriebsspannungen, vorteilhaft als Gleichspannung im Bereich von z.B. 1 V bis 50 V DC, welche über die Spannungsversorgungsleitung 20 zur zentralen Steuereinheit 21 zur Verfügung gestellt wird, ist ein Netzteil 17 angeordnet.

Das Netzteil 17 wird primärseitig aus zwei unterschiedlichen Energiequellen versorgt. Im normalen Betrieb erfolgt die Primärspannungsversorgung über die Versorgungsleitung 16 vom Hauptstromkreis des Leistungsteiles 3, welche von der externen Energieversorgung 4 gespeist wird. Diese Energieversorgung stellt die Hauptenergiequelle dar.

Als Ersatzenergiequelle sind wiederaufladbare Batterien 18 als Notstromversorgung angeordnet. Das Netzteil 17 enthält das für die Aufladung der Batterien 18 erforderliche Ladegerät und ist in der Lage, die Batterien 18 in ihrer vollen Ladung erhalten zu können. Jede der beiden Energiequellen ist für sich allein in der Lage, die Komponenten und Bestandteile des Steuerteils 2 zu versorgen. Die Versorgung des Steuerteils 2 erfolgt ausschließlich durch die Hauptenergiequelle, solange diese verfügbar ist. Bei einem Ausfall der Hauptenergiequelle schaltet das Netzteil 17 automatisch auf die Ersatzenergiequelle, die wiederaufladbaren Batterien 18 um, welche für mindestens 30 oder 72 Stunden zur Verfügung stehen. Steht die Hauptenergiequelle wieder zur Verfügung, d.h. liegt am Netzteil primärseitig die erforderliche Versorgungsspannung an, wird automatisch auf die externe Energieversorgung 4 zurückgeschaltet. Das Netzteil enthält eine Überwachungseinrichtung 19 für beide Energieversorgungen, die Hauptenergiequelle und die Notstromversorgung, und für das Ladegerät.

Die in Fig. 1 schematisch dargestellte zentrale Steuereinheit 21 bildet das Herzstück des Steuerteils 2. Sie enthält alle Komponenten und Schaltungen zum Datenaustausch, Steuern und Regeln über mindestens einen internen Bus 37 mit den im elektronischen Schaltschrank für Elektrosprinklerpumpen 1 angeordneten Funktionsmodulen 28, 29 31, 32, 33, 34 und über die Kommunikationsschnittstelle 23 mit der angeordneten Anzeige- und Bedieneinheit 24, sowie zur Steuerung interner Komponenten und Module im elektronischen Schaltschrank für Elektrosprinklerpumpen 1 und zur Steuerung angeschlossener externer Komponenten.

Fig.1 zeigt eine vorteilhafte Ausführungsform. Im Steuerteil 2 des elektronischen Schaltschrankes für Elektrosprinklerpumpen 1 für Löschanlagen sind eine zentrale Steuereinheit 21 mit Speicher 21.1, eine Anzeige- und Bedieneinheit 24 mit Display 25 und Anzeigeelementen 26 und Bedienelementen 27 und mindestens ein Zustandsüberwachungsmodul 32 und/oder mindestens ein Ringbusteilnehmermodul 29 angeordnet. Das Zustandsüberwachungsmodul 32 und das Ringbusteilnehmermodul 29 sind jeweils über mindestens einen internen Bus 37, und die Anzeige- und Bedieneinheit 24 über die Kommunikationsschnittstelle 23 mit der zentralen Steuereinheit 21 verbunden.

Das Zustandsüberwachungsmodul 32 und/oder das Ringbusteilnehmermodul 29 ist mit mindestens einer internen Komponente des Leistungsteils 3 und/oder mit mindestens einem externen Schalt- oder Geberelement über Signalleitungen 42, 39, 48 verbunden. Das Zustandsüberwachungsmodul 32 und das Ringbusteilnehmermodul 29 sind so eingerichtet und ausgebildet dass sie die Signalleitungen 42, 39, 48 auf Drahtbruch und Kurzschluss überwachen sowie die Schaltsignale der mit den Signalleitungen 42, 39, 48 verbundenen internen Komponenten und externen Schalt- oder Geberelementen erfassen.

Die Auswahl für vorteilhaften Varianten der Ausführung, ob ausschließlich nur ein oder mehrere Zustandsüberwachungsmodule 32, 28, oder zusätzlich zum Zustandsüberwachungsmodul 32 oder ausschließlich ein oder mehrere Ringbusteilnehmermodule 29 eingesetzt werden hängt davon ab, ob man die Schaltsignale von nicht adressierbaren oder von adressierbaren Teilnehmern erfasst.

Mittels einer Software, die über eine Programmierschnittstelle (nicht dargestellt) in den Prozessor der zentralen Steuereinheit geladen werden kann, sind in der zentralen Steuereinheit 21 sämtliche Steuer- und Überwachungsfunktionen des elektronischen Schaltschrankes für Elektrosprinklerpumpen 1 hinterlegt.

Um einen Ausfall der Steuerungsfunktion bei einer Prozessorstörung zu vermeiden, ist die zentrale Steuereinheit 21 in einer vorteilhaften Ausführung mit einer redundanten Prozessoreinheit 22 ausgerüstet.

In einer vorteilhaften Ausführung des elektronischen Schaltschrankes für Elektrosprinklerpumpen 1, enthält der Speicher 21.1 Wartungsdaten, ein Datum zur Wartung für mindestens eine Löschanlagenkomponente und/oder mindestens eine Betriebsstundenzahl für mindestens eine Löschanlagenkomponente und/oder mindestens eine Laufdauer für mindestens eine Löschanlagenkomponente innerhalb eines Beobachtungszeitraumes und/oder eine Ereignissollzahl. Die zentrale Steuereinheit 21 ist so eingerichtet und ausgebildet, dass sie bei Erreichen, oder Überschreiten oder Unterschreiten der Wartungsdaten die Anzeige- und Bedieneinheit 24 für eine alphanumerische und graphische Anzeige auf dem Display 25 und für eine optische Anzeige mit den Anzeigeelementen 26 ansteuert.

Fig. 1 zeigt auch eine weitere vorteilhafte Ausführung, in der über das zusätzliche Zustandsüberwachungsmodul 28 zusätzliche Bedienelemente 41 über Signalleitungen 42 in die Überwachung und Steuerung eingebunden sind. Das Zustandsüberwachungsmodul 28 ist baugleich mit dem Zustandsüberwachungsmodul 32. Es können aber auch die zusätzlichen Bedienelemente 41 über die Signalleitungen 42 mit dem Zustandsüberwachungsmodul 32 verbunden sein. Das Zustandsüberwachungsmodul 28 oder 32 überwacht die Signalleitungen 42 auf Drahtbruch und Kurzschluss.

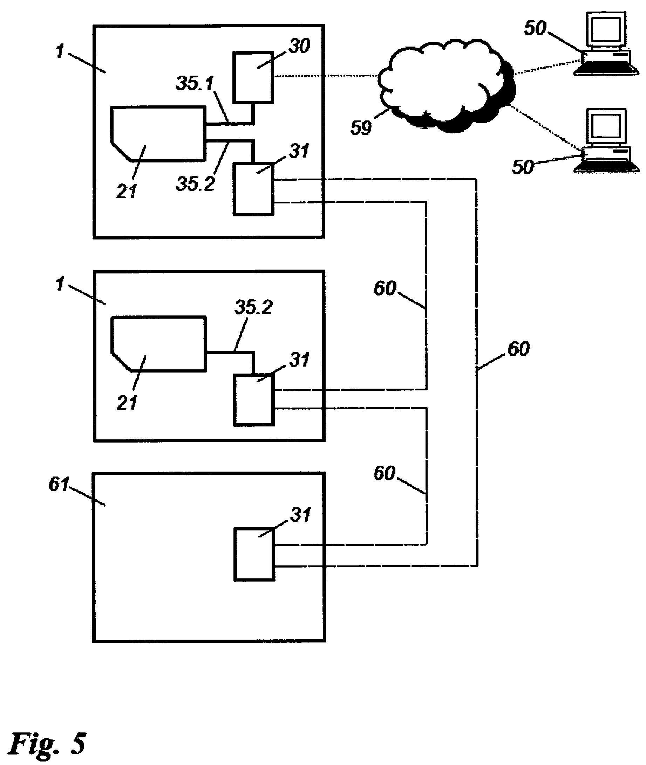

Der elektronische Schaltschrank für Elektrosprinklerpumpen 1 kann in Ausführungsvarianten mit zusätzlichen Funktionsmodulen ausgerüstet sein, oder nachgerüstet werden. Es können zusätzlich folgende Funktionsmodule verschiedener Ausprägung angeordnet sein ein Kommunikationsmodul 30 und/oder ein Relaismodul 33 und/oder ein Ansteuerungsmodul 34 und/oder ein Vernetzungsmodul 31, wie in Fig. 1 und Fig. 5 dargestellt. Das Relaismodul 33 und Ansteuerungsmodul 34 sind über einen internen Bus 37 mit der zentralen Steuereinheit 21 verbunden. Das Kommunikationsmodul 30 ist über die Kommunikationsschnittstelle 35.1 und das Vernetzungsmodul 31 über Kommunikationsschnittstellen 35.2 mit der zentralen Steuereinheit 21 verbunden. Je nach Bedarf können ein oder mehrere Funktionsmodule gleicher Ausprägung in Kombination mit anderen Funktionsmodulen angeordnet sein.

Das Kommunikationsmodul ist durch seinen Schaltungsauslegung, seinen integrierten Prozessor und die implementierte Software so eingerichtet und ausgebildet ist, dass es Daten aus dem Speicher 21.1 an entfernte Empfangs- und/oder Steuereinrichtung 50 drahtlos oder drahtgebunden überträgt und/oder Steuerbefehle von entfernten entfernte Empfangs- und/oder Steuereinrichtung 50 empfängt.

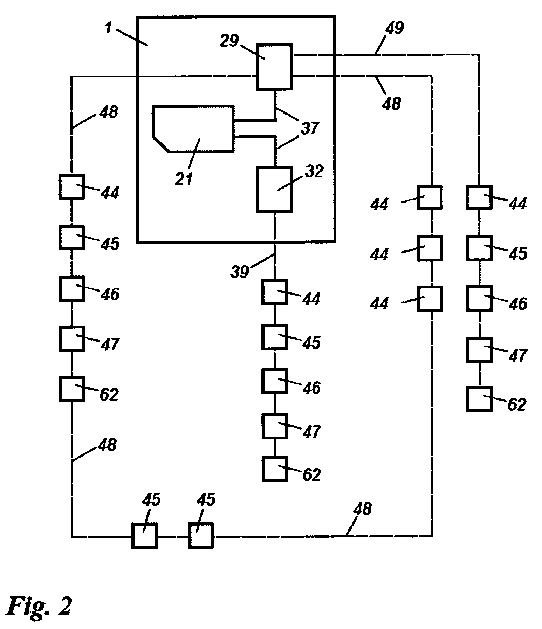

In Fig. 2 ist schematisch eine weitere vorteilhaften Ausführung des elektronischen Schaltschrankes für Elektrosprinklerpumpen 1 dargestellt. Als externe Schalt- oder Geberelement sind hier die Endschalter 44 und Druckschalter 45 und Schwimmerschalter 46 Temperaturschalter 47 sowie Brandmelder 62 mit den Funktionsmodulen 32 und 29 verbunden. In der dargestellten Ausführung sind adressierbare Schalt- oder Geberelemente 44, 45, 46, 47, 62 über eine Signalleitung 48 als geschlossene Ringbusleitung mit dem Ringbusteilnehmermodul 29 verbunden. Das Ringbusteilnehmermodul 29 ist mit einem internen Bus 37 mit der zentralen Steuereinheit 21 verbunden und tauscht über diesen internen Bus 37 Daten und Steuerbefehle aus. In einer weiteren vorteilhaften Ausführung erfolgt diese Verbindung über Signalleitungen 49 als Stichleitung. Zusätzlich oder als Alternative werden Schalt- oder Geberelemente 44, 45, 46, 47,62 für den Fall dass sie nicht adressierbar sind, über eine Signalleitung 39 mit dem Zustandsüberwachungsmodul 32 verbunden, welches die Signalleitung 39 auf Drahtbruch und Kurzschluss untersucht. Das Zustandsüberwachungsmodul 32 ist mit einem internen Bus 37 mit der zentralen Steuereinheit 21 verbunden und tauscht über diesen internen Bus 37 Daten und Steuerbefehle aus. In dieser Ausführungsvariante werden als Schaltsignale u.a. die Alarmsignale bei Branderkennung mit Brandmeldern 62 erfasst und der elektronische Schaltschrank für Elektrosprinklerpumpen übernimmt zusätzlich die Funktion einer Brandmelderzentrale.

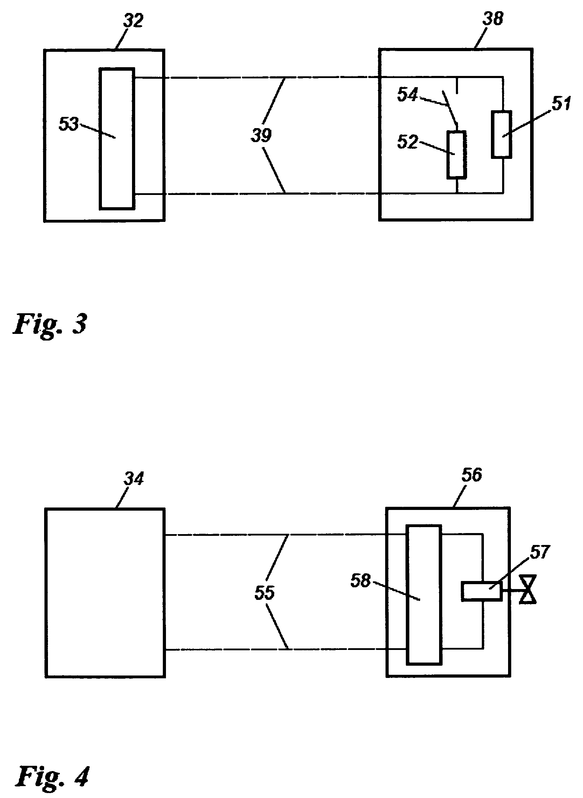

Fig. 3 zeigt eine beispielhafte schematische Darstellung des Messkreises eines Zustandsüberwachungsmoduls 32 zur Erfassung eines Schaltsignals eines externen Schalt- und Geberelementes am Beispiel des Pumpendruckschalters 38. Der Arbeitswiderstand R_{A} 52 wird vom Pumpendruckschalter 38 bei Auslösung durch Druckabfall über den Relaiskontakt 54 in den Messstromkreis geschaltet. Die Meßschaltung 53 misst nun die Stromerhöhung über die Signalleitungen und den zum Endwiderstand 51 parallel geschalteten Arbeitswiderstand 52. Das Zustandsüberwachungsmodul 32 erfasst diese über einen vorgegebenen Grenzwert liegende Stromerhöhung als Schaltsignal.

Fig. 4 zeigt eine beispielhafte schematische Darstellung der Ansteuerung eines Magnetventiles 56 durch das Ansteuerungsmodul 34 über die Steuerleitungen 55. Das Ansteuerungsmodul 34 überwacht die Steuerleitungen 55 auf Drahtbruch und Kurzschluss und zusätzlich über das im Magnetventil 56 integrierte Überwachungsmodul 58 die Funktionsfähigkeit der Magnetventilspule 57. Das Magnetventil 56 kann z.B. durch die Ansteuerung ein Löschfluid freigeben und den Löschvorgang einleiten. Damit übernimmt der elektronische Schaltschrank für Elektrosprinklerpumpen die Funktion einer Löschsteuerzentrale.

Unter Bezugnahme auf die in Fig. 1 bis Fig. 5 dargestellten Komponenten des elektronischen Schaltschrankes für Elektrosprinklerpumpen 1 und deren signaltechnischen Verbindungen, wird im Folgenden das Verfahren zur Überwachung und Steuerung von Löschanlagen mit einem elektronischen Schaltschrank für Elektrosprinklerpumpen 1 beschrieben. Mindesten ein Zustandsüberwachungsmodul 32 und/oder mindestens ein Ringbusteilnehmermodul 29 erfasst über Signalleitungen 42, 39, 49 zu mindestens einer internen Komponente des Leistungsteils 3 und zu mindestens einem externen Schalt- oder Geberelement, die Schaltsignale der mit den Signalleitungen verbundenen internen Komponenten und externen Schalt- oder Geberelementen und überwacht gleichzeitig die Signalleitungen 42, 39, 48 auf Drahtbruch und Kurzschluss. Hierbei fragt die zentrale Steuereinheit 21 mit Speicher 21.1 über mindestens einen internen Bus 37 die erfassten Schaltsignale und das Ergebnis der Überwachung der Signalleitungen 42, 39, 48 auf Drahtbruch und Kurzschluss ab und speichert dies. Anschließend leitet die zentrale Steuereinheit 21 über den mindestens einen internen Bus 37, der mit den Funktionsmodulen verbunden ist und/oder über die Kommunikationsschnittstelle 23, 35.1, 35.2 Folgeaktionen ein und steuert diese. Zusätzlich oder alternativ steuert die zentrale Steuereinheit 21 über eine Kommunikationsschnittstelle 23 die Anzeige- und Bedieneinheit 24 an und generiert eine alphanumerische Anzeige und /oder eine graphische Anzeige auf dem Display 25 und/oder eine optische Anzeige mit den Anzeigeelementen 26 der Anzeige- und Bedieneinheit 24.

In einer vorteilhaften Ausführung des Verfahrens wird das Schaltsignal durch den öffnenden oder schließenden Kontakt mindestens eines Pumpenstartdruckschalters 38 von mindestens einem Zustandsüberwachungsmodul 32 erfasst. Danach überträgt das Zustandsüberwachungsmodul 32 dieses Ereignis über den internen Bus 37 an die zentrale Steuereinheit 21 und die zentrale Steuereinheit 21 steuert über den internen Bus 37 ein Relaiskontakt eines Relaismoduls 33. Dieser Relaiskontakt schaltet eine Steuerspannung zum Motorstarter 7 und startet den Sprinklerpumpenmotor 9.

In einer weiteren vorteilhaften Ausführung des Verfahrens werden bei Feststellung eines Drahtbruchs oder Kurzschlusses der Signalleitungen 42, 39, 48 diese Störungen an der Anzeige- und Bedieneinheit 24 angezeigt.

Fig. 2 und Fig. 5 stellt schematisch die Funktionskomponenten und deren signaltechnische Verbindung für eine weitere vorteilhaften Ausführung der Verfahrens dar. Es werden die Schaltsignale von mindestens einem Endschaltern 44 und mindestens einem Druckschalter 45 und mindestens einem Schwimmerschalter 46 und mindestens einem Temperaturschalter 47 und einem Brandmelder 62 von einem Zustandsüberwachungsmodul 32 und von einem Ringbusteilnehmermodul 29 erfasst und die zentrale Steuereinheit 21 leitet dann über den internen Bus 37, der mit den Funktionsmodulen verbunden ist und/oder über die Kommunikationsschnittstelle 35.1, welche mit dem Kommunikationsmodul 30 verbunden ist, Folgeaktionen ein und steuert diese.

Wie in Fig. 5 dargestellt, wird in einer weiteren vorteilhaften Ausführung des Verfahrens einen Folgeaktion realisiert, indem ein Kommunikationsmodul 30 Daten aus dem Speicher 21.1 an entfernte Empfangseinrichtungen 50 drahtlos oder drahtgebunden überträgt. In Fig. 5 ist zusätzlich die Ausführungsvariante dargestellt, dass über das Vernetzungsmodul 31 der elektronische Schaltschrank für Elektrosprinklerpumpen 1 mit weiteren Schaltschränken für Elektrosprinklerpumpen 1 über die Kommunikationsleitungen 60 vernetzt ist und mit einer Brandmelderzentrale 61 oder Löschsteuerzentralen 61. Die Fig. 5 zeigt außerdem schematisch den Austausch von Daten zwischen der zentralen Steuereinheit 21 über das Kommunikationsmodul 30 welches in dieser Ausführungsform über das Internet 59 die Daten an entfernte Empfangs- und/oder Steuereinrichtungen 50 sendet.

Die erfindungsgemäße Lösung führt zu einer völlig neuen Art von Sprinklerzentrale, die platzsparend und besonders montagefreundlich in nur einem Gerät Funktionsmodule zusammenfasst, welche die Funktionen eines Schaltschranks für elektrisch angetriebene Sprinklerpumpen, einer Überwachungszentrale sowie einer Brandmelder- und Löschsteuerzentrale vereinigt. Ein wesentlicher Vorteil besteht darin, dass auch Brandmelder angeschlossen werden können. Ein weitere Vorteil besteht in der Möglichkeit über die Ansteuerungsmodule Auslöseelemente wie Magnetventile anzusteueren, die zur Steuerung von Löschanlagen verwendet werden können, wobei gleichzeitig die Steuerleitungen auf Drahtbruch und Kurzschluss überwacht werden.

Die Erfindung zeichnet sich auch durch das erfindungsgemäße Verfahren zur Überwachung von Löschanlagen aus, welche in dieser Art und Umfang mit Sprinklerschaltschränken des bekannten Standes der Technik nicht realisierbar waren, insbesondere die Wartungsdatenüberwachung und deren Dokumentation.

### Bezugszeichenliste

- 1: elektronischer Schaltschrank für Elektrosprinklerpumpen
- 2: Steuerteil
- 3: Leistungsteil
- 4: Energieversorgung
- 5: Versorgungskabel
- 6: Hauptschalter
- 7: Motorstarter
- 8: Stromversorgungsleitung zum Pumpenmotor
- 9: Sprinklerpumpenmotor
- 10: Motorüberwachungseinrichtung
- 11: Stromwandler
- 12: Amperemeter
- 13: Voltmeterumschalter
- 14: Voltmeter
- 15: Netzüberwachungseinheit
- 16: Versorgungsleitung zum Netzteil
- 17: Netzteil
- 18: Batterien
- 19: Überwachungseinrichtung Netzteil
- 20: Spannungsversorgungsleitung zur zentralen Steuereinheit
- 21: zentrale Steuereinheit
- 21.1: Speicher der zentralen Steuereinheit 21
- 22: Redundante Prozessoreinheit
- 23: Kommunikationsschnittstelle zur Anzeige- und Bedieneinheit 24
- 24: Anzeige- und Bedieneinheit
- 25: Display
- 26: Anzeigeelemente
- 27: Bedienelemente
- 28: Zustandsüberwachungsmodul
- 29: Ringbusteilnehmermodul
- 30: Kommunikationsmodul
- 31: Vernetzungsmodul
- 32: Zustandsüberwachungsmodul
- 33: Relaismodul
- 34: Ansteuerungsmodul
- 35.1: Kommunikationsschnittstelle des Kommunikationsmoduls 30
- 35.2: Kommunikationsschnittstelle des Vernetzungsmoduls 31

- 37: Interner Bus
- 38: Pumpenstartdruckschalter
- 39: Signalleitungen zu externen Komponenten
- 41: Bedienelemente
- 42: Signalleitungen zu den internen Komponenten
- 43: Signalleitungen zum Motorstarter 7
- 44: Endschalter
- 45: Druckschalter
- 46: Schwimmerschalter
- 47: Temperaturschalter
- 48: Signalleitungen als geschlossene Ringbusleitung
- 49: Signalleitung als Stichleitung für adressierbare Teilnehmer
- 50: entfernte Empfangs- und/oder Steuereinrichtung
- 51: Endwiderstand R_{E}
- 52: Arbeitswiderstand R_{A}
- 53: Meßschaltung
- 54: Relaiskontakt/Schaltkontakt
- 55: Steuerleitungen
- 56: Magnetventil
- 57: Magnetventilspule
- 58: Überwachungsmodul
- 59: Internet
- 60: Kommunikationsleitung
- 61: Brandmelder-/ Löschsteuerzentrale
- 62: Brandmelder

## Patentansprüche

1. Elektronischer Schaltschrank für Elektrosprinklerpumpen (1) zur Überwachung und Steuerung von Löschanlagenkomponenten mit einem Leistungsteil (3) mit internen Komponenten, welche einen Hauptschalter (6), einen Motorstarter (7), welcher über eine Stromversorgungsleitung (8) mit dem Sprinklerpumpenmotor (9) verbunden ist, eine Motorüberwachungseinrichtung (10) und eine Netzüberwachungseinheit (15) umfassen, sowie mit einem Steuerteil (2), wobei
• im Steuerteil (2) eine zentrale Steuereinheit (21) mit Speicher (21.1), eine Anzeige- und Bedieneinheit (24) mit Display (25) und Anzeigeelementen (26) und Bedienelementen (27), und mindestens ein Zustandsüberwachungsmodul (32) und/oder mindestens ein Ringbusteilnehmermodul (29) angeordnet sind, wobei
• die Module (32, 29) über mindestens einen internen Bus (37) und die Anzeige- und Bedieneinheit (24) über eine Kommunikationsschnittstelle (23) mit der zentralen Steuereinheit (21) verbunden sind und
• das mindestens eine Zustandsüberwachungsmodul (32) und/oder das mindestens eine Ringbusteilnehmermodul (29) mit mindestens einer internen Komponente des Leistungsteils (3) und/oder mit mindestens einem externen Schalt- oder Geberelement über Signalleitungen (42, 39, 48) verbunden sind, und
• das Zustandsüberwachungsmodul (32) und/oder das Ringbusteilnehmermodul (29) zur Überwachung der Signalleitungen (42, 39, 48) auf Drahtbruch und Kurzschluss sowie zur Erfassung der Schaltsignale der mit den Signalleitungen (42, 39, 48) verbundenen internen Komponenten und externen Schalt- oder Geberelementen eingerichtet und ausgebildet sind,
• das Zustandsüberwachungsmodul (32) dazu eingerichtet ist, das Schaltsignal des öffnenden oder schließenden Kontakts eines Pumpenstartdruckschalters (38) zu erfassen, und danach dieses Ereignis über den internen Bus (37) an die zentrale Steuereinheit (21) zu übertragen, wobei die zentrale Steuereinheit (21) dazu eingerichtet ist, über den internen Bus (37) einen Relaiskontakt eines Relaismoduls (33) zu steuern, welcher eine Steuerspannung zum Motorstarter (7) schaltet und den Sprinklerpumpenmotor (9) startet.

2. Schaltschrank nach Anspruch 1, **dadurch gekennzeichnet, dass** der Speicher (21.1) Wartungsdaten, vorzugsweise ein Datum zur Wartung für mindestens eine Löschanlagenkomponente und/oder mindestens eine Betriebsstundenzahl für mindestens eine Löschanlagenkomponente und/oder mindestens eine Laufdauer für mindestens eine Löschanlagenkomponente innerhalb eines Beobachtungszeitraumes und/oder eine Ereignissollzahl mindestens eines zu überwachenden Ereignisses enthält und die zentrale Steuereinheit (21) so eingerichtet und ausgebildet ist, dass sie bei Erreichen, und/oder Überschreiten, und/oder Unterschreiten der Wartungsdaten die Anzeige- und Bedieneinheit (24) für eine alphanumerische Anzeige und /oder graphische Anzeige auf dem Display (25) und/oder für einen optische Anzeige mit den Anzeigeelementen (26) ansteuert.

3. Schaltschrank nach einem der Ansprüche 1 bis 2, **dadurch gekennzeichnet, dass** dieser zusätzlich mindestens ein Relaismodul (33) und/oder mindestens ein Ansteuerungsmodul (34) aufweist, welche über einen internen Bus (37) mit der zentralen Steuereinheit (21) verbunden sind.

4. Schaltschrank nach einem der Ansprüche 1 bis 3, **dadurch gekennzeichnet, dass** das externe Schalt- oder Geberelement als Pumpenstartdruckschalter (38) und/oder als Endschalter 44 und /oder als Druckschalter (45) und/oder als Schwimmerschalter (46) und/oder als Temperaturschalter (47) und/oder als Brandmelder ausgebildet ist.

5. Schaltschrank nach einem der Ansprüche 1 bis 4, **dadurch gekennzeichnet, dass** mindestens ein Kommunikationsmodul (30) angeordnet ist, welches über eine Kommunikationsschnittstelle (35.1) mit der zentralen Steuereinheit (21) verbunden ist, wobei das Kommunikationsmodul (30) so eingerichtet und ausgebildet ist, dass es Daten aus dem Speicher (21.1) an mindestens eine entfernte Empfangs- und/oder Steuereinrichtung (50) drahtlos oder drahtgebunden überträgt und/oder Steuerbefehle von mindestens einer entfernten Empfangs- und/oder Steuereinrichtung (50) empfängt.

6. Verfahren zur Überwachung und Steuerung von Löschanlagenkomponenten mit einem elektronischen Schaltschrank für Elektrosprinklerpumpen (1), wobei
• mindestens ein Zustandsüberwachungsmodul (32) und/oder mindestens ein Ringbusteilnehmermodul (29) eines Steuerteiles über Signalleitungen (42, 39, 49) zu mindestens einer internen Komponente eines Leistungsteils (3) und zu mindestens einem externen Schalt- oder Geberelement, die Schaltsignale der mit den Signalleitungen verbundenen internen Komponenten, welche einen Hauptschalter (6), einen Motorstarter (7), welcher über eine Stromversorgungsleitung (8) mit dem Sprinklerpumpenmotor (9) verbunden ist, eine Motorüberwachungseinrichtung (10) und eine Netzüberwachungseinheit (15) umfassen, und externen Schalt- oder Geberelementen erfasst und
• gleichzeitig die Signalleitungen (42, 39, 48) auf Drahtbruch und Kurzschluss überwacht,
• wobei eine zentrale Steuereinheit (21) mit Speicher (21.1) über mindestens einen internen Bus (37) die erfassten Schaltsignale und das Ergebnis der Überwachung der Signalleitungen (42, 39, 48) auf Drahtbruch und Kurzschluss abfragt und speichert,
• danach leitet die zentrale Steuereinheit (21) über den mindestens einen internen Bus (37) und/oder über eine Kommunikationsschnittstelle (23, 35.1, 35.2) Folgeaktionen ein und steuert diese,
• und/oder die zentrale Steuereinheit (21) steuert über eine Kommunikationsschnittstelle (23) eine Anzeige- und Bedieneinheit (24) an und generiert eine alphanumerische Anzeige und /oder eine graphische Anzeige auf dem Display (25) und/oder eine optische Anzeige mit den Anzeigeelementen (26) der Anzeige- und Bedieneinheit (24), wobei
• das Schaltsignal durch den öffnenden oder schließenden Kontakt mindestens eines Pumpenstartdruckschalters (38) von mindestens einem Zustandsüberwachungsmodul (32) erfasst wird, danach das Zustandsüberwachungsmodul (32) dieses Ereignis über den internen Bus (37) an die zentrale Steuereinheit (21) überträgt und die zentrale Steuereinheit (21) über den internen Bus (37) ein Relaiskontakt eines Relaismoduls (33) steuert, welcher eine Steuerspannung zum Motorstarter (7) schaltet und den Sprinklerpumpenmotor (9) startet.

7. Verfahren nach Anspruch 6, **dadurch gekennzeichnet, dass** bei Feststellung eines Drahtbruchs oder Kurzschlusses der Signalleitungen (42, 39, 48) diese Störung an der Anzeige- und Bedieneinheit (24) alphanumerisch und/oder graphisch auf dem Display (25) und/oder optisch mit den Anzeigeelementen (26) angezeigt wird.

8. Verfahren nach Anspruch 6 oder 7, **dadurch gekennzeichnet, dass** eine zusätzliche Überwachung von Löschanlagenkomponenten stattfindet, indem die zentrale Steuereinheit (21) aus dem Speicher (21.1) Wartungsdaten, mindestens ein Datum zur Wartung für mindestens eine Löschanlagenkomponente und/oder mindestens eine Betriebsstundenzahl für mindestens eine Löschanlagenkomponente und/oder mindestens eine Laufdauer für mindestens eine Löschanlagenkomponente innerhalb eines Beobachtungszeitraumes und/oder eine Ereignissollzahl mindestens eines zu überwachenden Ereignisses ausliest und diese auf Erreichung, Überschreitung oder Unterschreitung überprüft und die zentrale Steuereinheit (21) bei Erreichen und/oder Überschreiten, und/oder Unterschreiten der Wartungsdaten die Anzeige- und Bedieneinheit (24) für eine alphanumerische Anzeige und /oder graphische Anzeige auf dem Display (25) und/oder eine optische Anzeige mit den Anzeigeelementen (26) ansteuert und/oder Folgeaktionen ansteuert.

9. Verfahren nach einem der Ansprüche 6 bis 8, **dadurch gekennzeichnet, dass** die Schaltsignale von mindestens einem Endschalter (44) und/oder mindestens einem Druckschalter (45) und/oder mindestens einem Schwimmerschalter (46) und/oder mindestens einem Temperaturschalter (47) und/oder mindestens einem Brandmelder erfasst werden.

10. Verfahren nach einem der Ansprüche 6 bis 9, **dadurch gekennzeichnet, dass** als Folgeaktion ein Kommunikationsmodul (30) Daten aus dem Speicher (21.1) an entfernte Empfangseinrichtungen (50) drahtlos oder drahtgebunden überträgt.

## Claims

1. An electronic switch cabinet for electric sprinkler pumps (1) for monitoring and controlling extinguishing system components with a power part (3) with internal components, comprising a main switch (6), a motor starter (7), that is connected to the sprinkler pump motor (9) via a current-supply line (8), a motor monitoring device (10) and a mains monitoring unit (15), and also with a control part (2), wherein
• in the control part (2) there are disposed a central control unit (21) having a memory (21.1), an indication and operating unit (24) having a display (25) and indication elements (26) and operating elements (27), and at least one state monitoring module (32) and/or at least one ring bus participant module (29), wherein
• the modules (32, 29) are connected via at least one internal bus (37) and the indication and operating unit (24) via a communications interface (23) to the central control unit (21) and
• the at least one state monitoring module (32) and/or the at least one ring bus participant module (29) are connected to at least one internal component of the power part (3) and/or to at least one external switch or transmitter element via signal lines (42, 39, 48), and
• the state monitoring module (32) and/or the ring bus participant module (29) are adapted and designed for monitoring the signal lines (42, 39, 48) for wire breakage and short circuit and also for detecting the switching signals of the internal components and external switch or transmitter elements connected to the signal lines (42, 39, 48),
• the state monitoring module (32) is arranged to detect the switching signal of the opening and closing contact of a pump start pressure switch (38), and then to transmit this event via the internal bus (37) to the central control unit (21), wherein the central control unit (21) is adapted to control, via the internal bus (37), a relay contact of a relay module (33), that switches a control voltage to the motor starter (7) and starts the sprinkler pump motor (9).

2. The switch cabinet according to Claim 1, **characterized in that** the memory (21.1) contains maintenance data, preferably a date for maintenance for at least one extinguishing system component and/or at least one hours-of-operation number for at least one extinguishing system component and/or at least one operating duration for at least one extinguishing system component during an observation period and/or a target event number of at least one event to be monitored and the central control unit (21) is adapted and designed such that on reaching, and/or exceeding, and/or falling below the maintenance data drives the indication and operating unit (24) for an alphanumeric indication and/or graphic indication on the display (25) and/or for an optical indication using the indication elements (26).

3. The switch cabinet according to one of Claims 1 to 2, **characterized in that** in addition it exhibits at least one relay module (33) and/or at least one drive module (34) that are connected to the central control unit (21) via an internal bus (37).

4. The switch cabinet according to one of Claims 1 to 3, **characterized in that** the external switch or transmitter element is designed as a pump start pressure switch (38) and/or as a limit switch (44) and/or as a pressure switch (45) and/or as a float switch (46) and/or as a temperature switch (47) and/or as a fire detector.

5. The switch cabinet according to one of Claims 1 to 4, **characterized in that** at least one communications module (30) is disposed, that is connected to the central control unit (21) via a communications interface (35.1), wherein the communications module (30) is adapted and designed such that it transmits in a wired or wireless fashion data from the memory (21.1) to at least one remote receiving and/or control device (50) and/or receives control commands from at least one remote receiving and/or control device (50).

6. A method for monitoring and controlling extinguishing system components using an electronic switch cabinet for electric sprinkler pumps (1), wherein
• at least one state monitoring module (32) and/or at least one ring bus participant module (29) of a control part detects via signal lines (42, 39, 49) to at least one internal component of a power part (3) and to at least one external switch or transmitter element, the switching signals of the internal components, connected with the signal lines and comprising a main switch (6), a motor starter (7), that is connected to the sprinkler pump motor (9) via a current-supply line (8), a motor monitoring device (10), and a mains monitoring unit (15), and external switch and transmitter elements, and
• at the same time monitors the signal lines (42, 39, 48) for wire breakage and short circuit,
• wherein a central control unit (21) having a memory (21.1) queries and stores via at least one internal bus (37) the detected switching signals and the result of monitoring the signal lines (42, 39, 48) for wire breakage and short circuit,
• thereafter the central control unit (21) initiates follow-up actions and controls these via the at least one internal bus (37) and/or via a communications interface (23,35.1,35.2),
• and/or the central control unit (21) drives via a communications interface (23) an indication and operating unit (24) and generates an alphanumeric indication and/or a graphic indication on the display (25) and/or an optical indication with the indication elements (26) of the indication and operating unit (24), wherein
• the switching signal caused by the opening or closing contact of at least one pump start pressure switch (38) is detected by at least one state monitoring module (32), thereafter the state monitoring module (32) transmits this event via the internal bus (37) to the central control unit (21) and the central control unit (21) controls via the internal bus (37) a relay contact of a relay module (33), that switches a control voltage to the motor starter (7) and starts the sprinkler pump motor (9).

7. The method according to Claim 6, **characterized in that** on determining a wire breakage or short circuit of the signal lines (42, 39, 48) this fault is indicated at the indication and operating unit (24) alphanumerically and/or graphically on the display (25) and/or optically with the indication elements (26).

8. The method according to Claim 6 or 7, **characterized in that** additional monitoring of extinguishing system components takes place, **in that** the central control unit (21) reads from the memory (21.1) maintenance data, at least one date for maintenance for at least one extinguishing system component and/or at least one hours-of-operation number for at least one extinguishing system component and/or at least one operating duration for at least one extinguishing system component during an observation period and/or a target event number of at least one event to be monitored and checks these for reaching, exceeding or falling below and the central control unit (21) on reaching and/or exceeding, and/or falling below the maintenance data drives the indication and operating unit (24) for an alphanumeric indication and/or graphic indication on the display (25) and/or an optical indication with the indication elements (26) and/or drives follow-up actions.

9. The method according to one of Claims 6 to 8, **characterized in that** the switching signals are detected by at least one limit switch (44) and/or by at least one pressure switch (45) and/or by at least one float switch (46) and/or by at least one temperature switch (47) and/or by at least one fire detector.

10. The method according to one of Claims 6 to 9, **characterized in that** as a follow-up action a communications module (30) transmits in a wired or wireless fashion data from the memory (21.1) to remote receiving devices (50).

## Revendications

1. Armoire de commande électronique de pompes électriques de sprinklers (1) pour surveillance et pilotage de composants d'installations d'extinction, composée d'une partie puissance (3) à composants internes comprenant un interrupteur général (6), un démarreur de moteur (7) relié par un câble d'alimentation électrique (8) au moteur de la pompe de sprinklers (9), un dispositif de surveillance du moteur (10) et une unité de surveillance du secteur (15), ainsi que d'une partie commande (2),
• la partie commande (2) comportant une unité centrale de commande (21) dotée d'une mémoire (21.1), une unité d'affichage et de commande (24) avec écran (25) et éléments d'affichage (26) et éléments de commande (27), et au moins un module de surveillance d'état (32) et/ou au moins un module de connexion à un bus (29),
• les modules (32, 29) étant reliés par au moins un bus interne (37) et l'unité d'affichage et de commande (24), via une interface de communication (23), à l'unité centrale de commande (21) et
• ledit au moins un module de surveillance d'état (32) et/ou ledit au moins un module de connexion à un bus (29) étant reliés à au moins un composant interne de la partie puissance (3) et/ou à au moins un élément commutateur ou capteur externe par des lignes de signaux (42, 39, 48), et
• le module de surveillance d'état (32) et/ou le module de connexion à un bus (29) étant conformés et configurés de manière à surveiller la rupture de fil et le court-circuit sur les lignes de signaux (42, 39, 48) ainsi qu'à détecter les signaux de commutation des composants internes et éléments commutateurs ou capteurs externes reliés aux lignes de signaux (42, 39, 48),
• le module de surveillance d'état (32) étant configuré de manière à détecter le signal de commutation du contact ouvrant ou fermant d'un manocontact de démarrage de la pompe (38) et à transmettre ensuite cet événement, via le bus interne (37), à l'unité centrale de commande (21), l'unité centrale de commande (21) étant configurée de manière à exciter via le bus interne (37) un contact de relais d'un module de relais (33) qui applique une tension de commande au démarreur de moteur (7) et fait démarrer le moteur de la pompe de sprinklers (9).

2. Armoire de commande selon la revendication 1, **caractérisée en ce que** la mémoire (21.1) contient des données de maintenance, de préférence une date de maintenance pour au moins un composant de l'installation d'extinction et/ou au moins un nombre d'heures de fonctionnement pour au moins un composant de l'installation d'extinction et/ou au moins une durée de fonctionnement pour au moins un composant de l'installation d'extinction dans un intervalle de temps d'observation et/ou un nombre donné de survenances d'au moins un événement à surveiller, et que l'unité centrale de commande (21) est conformée et configurée de manière à ce qu'en cas d'atteinte et/ou de dépassement par le haut et/ou par le bas des données de maintenance, elle excite l'unité d'affichage et de commande (24) en vue d'un affichage alphanumérique et/ou d'un affichage graphique à l'écran (25) et/ou d'un affichage visuel à l'aide des éléments d'affichage (26).

3. Armoire de commande selon l'une des revendications 1 ou 2, **caractérisée en ce que** celle-ci présente en outre au moins un module de relais (33) et/ou au moins un module d'excitation (34) reliés par un bus interne (37) à l'unité centrale de commande (21).

4. Armoire de commande selon l'une des revendications 1 à 3, **caractérisée en ce que** l'élément commutateur ou capteur externe se présente sous la forme d'un manocontact de démarrage de pompe (38) et/ou d'un interrupteur de fin de course (44) et/ou d'un manocontact (45) et/ou d'un interrupteur à flotteur (46) et/ou d'un thermocontact (47) et/ou d'un détecteur d'incendie.

5. Armoire de commande selon l'une des revendications 1 à 4, **caractérisée en ce qu'**est disposé au moins un module de communication (30) relié via une interface de communication (35.1) à l'unité centrale de commande (21), le module de communication (30) étant conformé et configuré de manière à transmettre sans fil ou par voie filaire des données de la mémoire (21.1) à au moins un dispositif distant de réception et/ou de commande (50) et/ou à recevoir des ordres de commande d'au moins un dispositif distant de réception et/ou de commande (50).

6. Procédé de surveillance et de pilotage de composants d'installations d'extinction à l'aide d'une armoire de commande électronique de pompes électriques de sprinklers (1),
• au moins un module de surveillance d'état (32) et/ou au moins un module de connexion à un bus (29) d'une unité de commande détectant via des lignes de signaux (42, 39, 49) reliées à au moins un composant interne d'une partie puissance (3) et à au moins un élément commutateur ou capteur externe les signaux de commutation des composants internes reliés aux lignes de signaux et comprenant un interrupteur général (6), un démarreur de moteur (7) relié par un câble d'alimentation électrique (8) au moteur de la pompe de sprinklers (9), un dispositif de surveillance du moteur (10) et une unité de surveillance du secteur (15), ainsi que les signaux de commutation des éléments commutateurs ou capteurs externes et
• surveillant en même temps la rupture de fil et le court-circuit sur les lignes de signaux (42, 39, 48),
• une unité centrale de commande (21) dotée d'une mémoire (21.1) scrutant et mettant en mémoire, via au moins un bus interne (37), les signaux de commutation détectés et le résultat de la surveillance de la rupture de fil et du court-circuit sur les lignes de signaux (42, 39, 48),
• l'unité centrale de commande (21) engageant et pilotant ensuite les actions en séquence via ledit au moins un bus interne (37) et/ou via une interface de communication (23, 35.1, 35.2),
• et/ou l'unité centrale de commande (21) excitant via une interface de communication (23) une unité d'affichage et de commande (24) et générant un affichage alphanumérique et/ou un affichage graphique à l'écran (25) et/ou un affichage visuel à l'aide des éléments d'affichage (26) de l'unité d'affichage et de commande (24),
• le signal de commutation traversant le contact ouvrant ou fermant d'au moins un manocontact de démarrage de pompe (38) étant détecté par au moins un module de surveillance d'état (32), le module de surveillance d'état (32) transmettant ensuite cet événement via le bus interne (37) à l'unité centrale de commande (21), et l'unité centrale de commande (21) excitant via le bus interne (37) un contact de relais d'un module de relais (33) qui applique une tension de commande au démarreur de moteur (7) et fait démarrer le moteur de la pompe de sprinklers (9).

7. Procédé selon la revendication 6, **caractérisé en ce qu'**en cas de constat d'une rupture de fil ou d'un court-circuit sur les lignes de signaux (42, 39, 48), ce défaut est affiché sous forme alphanumérique et/ou sous forme graphique à l'écran (25) de l'unité d'affichage et de commande (24) et/ou visuellement à l'aide des éléments d'affichage (26).

8. Procédé selon la revendication 6 ou 7, **caractérisé en ce qu'**a lieu une surveillance additionnelle de composants d'installations d'extinction dans laquelle l'unité centrale de commande (21) lit dans la mémoire (21.1) des données de maintenance, dont au moins une date de maintenance pour au moins un composant de l'installation d'extinction et/ou au moins un nombre d'heures de fonctionnement pour au moins un composant de l'installation d'extinction et/ou au moins une durée de fonctionnement pour au moins un composant de l'installation d'extinction dans un intervalle de temps d'observation et/ou un nombre donné de survenances d'au moins un événement à surveiller, et qu'elle en vérifie l'atteinte ou le dépassement par le haut ou par le bas et qu'en cas d'atteinte et/ou de dépassement par le haut et/ou par le bas des données de maintenance, l'unité centrale de commande (21) excite l'unité d'affichage et de commande (24) en vue d'un affichage alphanumérique et/ou d'un affichage graphique à l'écran (25) et/ou d'un affichage visuel à l'aide des éléments d'affichage (26) et/ou pilote des actions en séquence.

9. Procédé selon l'une des revendications 6 à 8, **caractérisé en ce que** les signaux de commutation sont détectés par au moins un interrupteur de fin de course (44) et/ou au moins un manocontact (45) et/ou au moins un interrupteur à flotteur (46) et/ou au moins un thermocontact (47) et/ou au moins un détecteur d'incendie.

10. Procédé selon l'une des revendications 6 à 9, **caractérisé en ce qu'**en tant qu'action en séquence, un module de communication (30) transmet sans fil ou par voie filaire des données provenant de la mémoire (21.1) à des dispositifs de réception distants (50).
